# EUROPÄISCHE PATENTSCHRIFT

(11) **EP 3 233 673 B1**
(45) Veröffentlichungstag und Bekanntmachung des Hinweises auf die Patenterteilung: **18.03.2020**
(21) Anmeldenummer: 15828479.4
(22) Anmeldetag: 17.12.2015
(51) Int. Cl.: B65G 1/04

(54) **LAGERANORDNUNG MIT VERBESSERTEM ENERGIEAUSGLEICH ZWISCHEN REGALBEDIENGERÄTEN**
WAREHOUSE WITH OPTIMISED DISTRIBUTION OF POWER BETWEEN STACKER CRANES
ENTREPOT AUTOMATIQUE À DISTRIBUTION OPTIMISÉE DE PUISSANCE

(30) Priorität: 18.12.2014 AT 509212014
(43) Veröffentlichungstag der Anmeldung: 25.10.2017
(73) Patentinhaber: TGW Logistics Group GmbH, 4614 Marchtrenk (AT)
(72) Erfinder: GROßE, Eric, 63225 Langen (DE); GRUBER, Thomas, 4643 Pettenbach (AT); SCHRÖPF, Harald Johannes, 4600 Wels (AT)
(74) Vertreter: Burger, Hannes
(86) Internationale Anmeldenummer: PCT/AT2015/050322
(87) Internationale Veröffentlichungsnummer: WO 2016/094923

(56) Entgegenhaltungen:
- DE-A1- 4 339 885
- DE-A1- 4 421 914
- JP-A- H11 301 814
- JP-A- 2000 355 405
- JP-A- 2001 261 246
- JP-A- 2002 362 710
- JP-A- 2007 112 534
- JP-A- 2008 081 219
- JP-A- 2011 006 228
- JP-A- 2012 086 962
- JP-A- 2012 246 095
- US-A1- 2008 009 979
- Yaskawa Electric Corporation: "Contributing to the Environment through Products and Services Introduction of Application Example of DC Multilink", YASKAWA Report 2014, 1. September 2014 (2014-09-01), Seiten 38-39, XP055265335, Gefunden im Internet: URL:https://www.yaskawa.co.jp/wp-content/u ploads/2014/12/ar2014e1.pdf [gefunden am 2016-04-14]
- Yaskawa: "High-Power Factor Converter with Power Regeneration K50", , 26. Februar 2013 (2013-02-26), XP055266748, Gefunden im Internet: URL:http://www.e-mechatronics.com/ec_cert/ DownloadFileLog?MENU2URL=%2Fdownload%2Fcat alog%2F&RURL=%2Fdownload%2Fdatas%2Fcatalog %2Fkaepc71065603%2Fkaepc71065603d_3_0.pdf [gefunden am 2016-04-19]

## Beschreibung

Die Erfindung betrifft eine Lageranordnung mit mehreren Lagerplätzen für Stückgüter, die nebeneinander und übereinander angeordnet sind, mehreren rechnergesteuerten Regalbediengeräten zum Einlagern der Stückgüter auf die Lagerplätze und Auslagern der Stückgüter von den Lagerplätzen, welche relativ zu den Lagerplätzen verfahrbar sind, und mit einer Stromversorgung für die genannten Regalbediengeräte. Die Erfindung betrifft auch ein Verfahren zum Betrieb der genannten Anordnung.

Eine solche Lageranordnung und ein solches Verfahren sind grundsätzlich bekannt. Beispielsweise offenbart die EP 1 749 341 B1 dazu ein Verfahren zum energiesparenden Betreiben von Regalbediengeräten in einem Regallagersystem. Die Bewegungsabläufe mehrerer Regalbediengeräte werden dabei so aufeinander abgestimmt, dass die beim Bremsen von einem Regalbediengerät generatorisch erzeugte elektrische Energie gleichzeitig für das Beschleunigen eines anderen Regalbediengeräts herangezogen wird. Zwar wird die Energieeffizienz eines Regallagersystems durch diese Maßnahme gesteigert, jedoch sinkt damit die Leistungsfähigkeit desselben im Hinblick auf das Ein- und Auslagern von Gegenständen.

Die JP 2002/362710 A offenbart eine Lageranordnung nach dem Oberbegriff des Anspruchs 1 und ein Verfahren nach dem Oberbegriff des Anspruchs 2.

Die DE 10 2010 030 998 A1 darüber hinaus ein Transportsystem mit Führungen für geführte Transportfahrzeuge, wobei die Transportfahrzeuge über eine Schleifleitung sowohl mit elektrischem Strom als auch mit Daten von einer Steuereinheit versorgt werden.

Die JP 2010/226875 A offenbart schließlich ein System zur Speicherung der von einem Roboter abgegebenen, rekuperativen Energie beziehungsweise zur Nutzung derselben.

Eine Aufgabe der Erfindung ist es daher, eine verbesserte Lageranordnung und ein verbessertes Verfahren zum Betrieb desselben anzugeben. Insbesondere soll die Leistungsfähigkeit eines Regallagersystems bei hoher Energieeffizienz gegenüber dem Stand der Technik gesteigert werden.

Die Aufgabe der Erfindung wird mit einer Lageranordnung nach Anspruch 1 gelöst.

Weiterhin wird die Aufgabe der Erfindung auch mit einem Verfahren nach Anspruch 2 gelöst.

Der erste Schütz im Strompfad zum Regalbediengerät dient dem Ein- oder Ausschalten der Fahrspannung für dieses Regalbediengerät. Im Fahrbetrieb ist der erste Schütz demzufolge geschlossen, im Wartungsfall oder wenn Personen den Fahrbereich des Regalbediengeräts betreten dagegen geöffnet. Die Ansteuerung des ersten Schützes erfolgt über eine Betriebs-Steuerung, die aus einem Betriebs-Stromnetz versorgt wird. Beispielsweise kann die Betriebs-Spannung für die Betriebs-Steuerung 12V, 24V oder 48V betragen, und die Betriebs-Steuerung kann beispielsweise dazu ausgebildet sein, Befehle von einem zentralen Leitrechner zu erhalten und an das Regalbediengerät weiterzuleiten. Fällt das Betriebs-Stromnetz aus, so kann die Betriebs-Steuerung den ersten Schütz nicht mehr ansteuern, weswegen die Stromversorgung des Regalbediengeräts ohne weitere Maßnahmen plötzlich und unvorbereitet ausfällt. Dies ist insbesondere dann nachteilig und auch gefährlich, wenn das Regalbediengerät nicht über mechanische selbsthaltende Bremsen verfügt, sondern elektronisch mit Hilfe des Antriebsmotors gebremst wird, beispielsweise mit Hilfe eines Vierquadrantenstellers. In diesem Fall ist ein kontrolliertes Anhalten des Regalbediengeräts bei Ausfall der Fahrspannung nicht möglich, weswegen das Regalbediengerät und die Bewegungsglieder desselben unkontrolliert gegen mechanische Anschläge fahren könnten. Dadurch könnten nicht nur das Regalbediengerät selbst, sondern auch die mit diesem transportierten Waren Schaden nehmen.

Durch die vorgeschlagenen Maßnahmen wird dagegen der (in der Regel zumindest teilweise geladene) Stromspeicher an die Steuerspule des ersten Schützes geschaltet, wodurch der im Strompfad zum Regalbediengerät liegende Schaltkontakt auch bei Wegfall der Betriebs-Spannung für die Betriebs-Steuerung geschlossen bleibt. Das Regalbediengerät kann oder die Regalbediengeräte können in Folge mit der im Stromspeicher enthaltenen Energie weiterhin mit elektrischer Energie versorgt werden und kontrolliert zum Stillstand gebracht werden. Hilfreich ist dabei auch der Umstand, dass beim Bremsen anfallende rekuperativ erzeugte elektrische Energie in den Stromspeicher rückgespeist wird und den Spannungspegel dort anhebt. Das heißt, dass ein kontrolliertes Bremsen auch dann möglich ist, wenn der Stromspeicher bei Ausfall des Versorgungsnetzes den niedrigsten im Normalbetrieb vorkommenden Spannungspegel aufweist.

Unter einem "übermäßigen" Spannungsabfall ist insbesondere ein Spannungsabfall um wenigstens 10% der Nennspannung zu verstehen. Beträgt der Nennwert der Betriebs-Spannung beispielsweise 48V, dann liegt im obigen Fall ein übermäßiger Spannungsabfall vor, wenn der Ist-Wert der Betriebs-Spannung auf 43V oder weniger absinkt.

Generell kann die beim Bremsen von einem Regalbediengerät generatorisch erzeugte elektrische Energie das Vorsehen eines Stromspeichers gespeichert und zu einem späteren Zeitpunkt für das Beschleunigen dieses oder eines anderen Regalbediengeräts herangezogen werden. Dadurch wird der energieeffiziente Betrieb der Lageranordnung auch ohne einer speziellen Abstimmung der Bewegungsabläufe mehrerer Regalbediengeräte ermöglicht. Das heißt mit anderen Worten, dass die Energieeffizienz der Lageranordnung durch die vorgeschlagenen Maßnahmen gesteigert wird, ohne damit die Leistungsfähigkeit desselben im Hinblick auf das Ein- und Auslagern von Gegenständen negativ zu beeinflussen. Insbesondere sind die Regalbediengeräte dabei als Einebenen-Regalbediengeräte ("Shuttles") und/oder als Mehrebenen-Regalbediengeräte ausgeführt.

Weitere vorteilhafte Ausgestaltungen und Weiterbildungen der Erfindung ergeben sich im Folgenden aus den Unteransprüchen sowie aus der Beschreibung in Zusammenschau mit den Figuren.

Günstig ist es, wenn die Lagerplätze in Regalreihen organisiert sind, welche benachbart zu zumindest einer Regalgasse angeordnet sind, wenn die Regalgasse in übereinander liegenden Ebenen unabhängig voneinander verfahrbare Regalbediengeräte aufweist und wenn eine einzige Stromversorgung und ein einziger Stromspeicher Regalbediengeräten mehrerer Ebenen der Regalgasse zugeordnet sind. Vorteilhaft ist dabei, dass nur ein einziger Stromspeicher und nur eine einzige Stromversorgung für vergleichsweise viele (im Besonderen für alle) Regalbediengeräte vorgesehen werden muss.

Günstig ist es auch, wenn die Lagerplätze in Regalreihen organisiert sind, welche benachbart zu zumindest einer Regalgasse angeordnet sind, wenn die Regalgasse in übereinander liegenden Ebenen unabhängig voneinander verfahrbare Regalbediengeräte aufweist und wenn die zumindest eine Stromversorgung und jeweils ein Stromspeicher Regalbediengeräten mehrerer Ebenen der Regalgasse zugeordnet sind. Beispielsweise können die Regalreihen in mehrere Lagerbereiche organsiert sein, denen jeweils eine Stromversorgung und ein Stromspeicher zugeordnet sind. Beispielsweise kann eine Regalreihe mit 18 Ebenen in 3 Lagerbereiche zu je 6 Regalebenen organisiert sein. In jeder Regalebene kann ein Einebenen-Regalbediengerät ("Shuttle") vorgesehen sein. Vorteilhaft sind bei dieser Ausführungsform die gute Skalierbarkeit, die gute Verfügbarkeit vergleichsweise kleiner Stromspeicher sowie die gute Verfügbarkeit der Lageranordnung als solcher. Bei Ausfall eines Stromspeichers fällt ja nur ein Lagerbereich aus und nicht eine komplette Regalgasse.

Günstig ist es weiterhin, wenn die Lagerplätze in Regalreihen organisiert sind, welche benachbart zu Regalgassen angeordnet sind und wenn je Regalgasse ein einziges Regalbediengerät oder in übereinander liegenden Ebenen unabhängig voneinander verfahrbare Regalbediengeräte angeordnet sind und wenn die zumindest eine Stromversorgung und der zumindest eine Stromspeicher den Regalbediengeräten mehrerer Regalgassen zugeordnet sind. Auf diese Weise kann ein Energieausgleich über mehrere Regalgassen hinweg erfolgen.

Vorteilhaft ist es in obigem Zusammenhang auch, wenn der zumindest einen Stromversorgung und dem zumindest einen Stromspeicher ein Vertikalförderer, insbesondere ein Lift oder ein Paternoster, zugeordnet ist. Auf diese Weise kann auch die von einem Vertikalförderer generatorisch erzeugte Energie gespeichert beziehungsweise verwertet werden.

Generell ist es auch von Vorteil, wenn der gesamten Lageranordnung mehrere Stromversorgungen und/oder Stromspeicher zugeordnet sind, da auf diese Weise die Verfügbarkeit der Lageranordnung erhöht werden kann. Grundsätzlich kann ein Stromspeicher mehreren Stromversorgungen zugeordnet sein, oder es kann auch eine Stromversorgung mehreren Stromspeichern zugeordnet sein.

Besonders vorteilhaft ist es, wenn als Stromspeicher ein Superkondensator respektive Powercap/Supercap vorgesehen ist. Superkondensatoren (auch Ultrakondensatoren, Powercap oder Supercap genannt) sind elektrochemische Kondensatoren und konkret eine spezielle Bauform von Doppelschichtkondensatoren. Superkondensatoren zeichnen sich durch schnelle Energieaufnahme und -abgabe sowie durch hohe Lebensdauer aus und sind für den genannten Einsatzzweck daher besonders geeignet. Generell kann alternativ oder zusätzlich zu einem Superkondensator auch ein Akkumulator als Stromspeicher vorgesehen sein.

Besonders vorteilhaft ist es weiterhin, wenn die Lageranordnung eine elektronische Schaltung aufweist, welche dazu eingerichtet ist, eine Ladespannung des Stromspeichers und/oder einen zeitlichen Verlauf derselben zu messen und ein Alarmsignal auszulösen, wenn der gemessene Wert außerhalb eines Sollbereichs liegt. Dementsprechend ist auch ein Verfahren zur Überwachung eines Stromspeichers, welcher zumindest einer Stromversorgung für mehrere Regalbediengeräte zugeordnet oder von dieser umfasst ist, von Vorteil, wobei die Regalbediengeräte relativ zu nebeneinander und übereinander angeordneten Lagerplätzen eines Lagers verfahrbar sind, eine Ladespannung des Stromspeichers und/oder ein zeitlicher Verlauf derselben gemessen wird und ein Alarmsignal ausgelöst wird, wenn der gemessene Wert außerhalb eines Sollbereichs liegt.

Obwohl die vorgeschlagenen Stromspeicher an sich hohe Lebensdauer aufweisen und zuverlässig sind, so ist ein Ausfall derselben in letzter Konsequenz nicht auszuschließen. Des Weiteren muss mit einer Degradation des Stromspeichers, das heißt mit einer Abnahme des Speichervermögens gerechnet werden. Insbesondere ein plötzlich auftretender und damit überraschender Ausfall eines Stromspeichers sowie ein nicht erkannter Abfall des Speichervermögens sind insofern gefährlich, als dadurch die beim Abbremsen eines Regalbediengeräts entstehende generatorische Energie nicht oder nur unzureichend abgeführt werden kann und eine Bremsung daher nicht oder nur wenig effektiv erfolgt. Das heißt, die Bremsleistung eines Regalbediengeräts nimmt mit dem Ausfall des Stromspeichers unter Umständen schlagartig ab. Insbesondere beim Manipulieren von schweren Lasten können dadurch erhebliche Schäden auftreten, beispielsweise wenn eine Last beim Absenken nicht hinreichend gebremst werden kann und in Folge am Boden aufschlägt. Ein solches Verhalten ist auch insofern tückisch, als ein Fehler wohl zuallererst in der elektronischen Steuerung eines Regalbediengeräts vermutet und ein defekter Stromspeicher erst in einem sehr späten Stadium der Fehlersuche entdeckt werden würde. Durch die vorgeschlagenen Maßnahmen kann aber ein Schaden an Mensch und Maschine verhindert und eine Fehleranalyse vermieden oder zumindest verkürzt werden. Insgesamt wird dadurch auch die Verfügbarkeit der Lageranordnung erhöht.

Zur Überwachung des Stromspeichers stehen grundsätzlich mehrere Möglichkeiten zur Verfügung. Beispielsweise kann ein zeitlicher Verlauf der Ladespannung beim Laden des Stromspeichers ermittelt werden. Entspricht dieser Verlauf nicht einem Sollverlauf, so kann ein Alarmsignal ausgelöst werden, um das Bedienpersonal entsprechend zu informieren. Eine weitere Möglichkeit besteht darin, die Ladespannung als solche dahingehend zu überwachen, ob sie einen gewissen Sollwert erreicht. Ist dies nicht der Fall, so kann wiederum ein Alarmsignal ausgelöst werden. Darüber hinaus kann der Stromspeicher im laufenden Betrieb testweise entladen und der Spannungsverlauf mit einem Sollverlauf verglichen werden. Entspricht der Ist-Verlauf nicht dem erwarteten Sollverlauf, so kann wiederum ein Alarmsignal ausgelöst werden.

Die oben angesprochene Alarmierung kann je nach Zustand des Stromspeichers gestaffelt erfolgen. Beispielsweise kann eine frühe Warnung "Leistungsaufnahmevermögen des Stromspeichers 95%" lauten. Bei weiter fortschreitender Degradation kann eine Alarmierung beispielsweise "Leistungsaufnahmevermögen des Stromspeichers 80% - Ersatzteil besorgen" lauten. Schließlich kann der Betreiber der Anlage aufgefordert werden den Stromspeicher zu tauschen, etwa mit der Meldung "Leistungsaufnahmevermögen des Stromspeichers unter 70% - Austausch erforderlich". Zusätzlich zu den oben angesprochenen Maßnahmen kann ein Alarm auch dazu führen, dass die Regalbediengeräte außer Betrieb genommen werden oder nur mehr ein eingeschränkter Betrieb zugelassen wird, um Schäden an den Regalbediengeräten beziehungsweise an den damit manipulierten Gegenständen zu vermeiden.

Besonders vorteilhaft ist es auch, wenn die Lageranordnung eine elektronische Schaltung aufweist, welche dazu eingerichtet ist, den Stromspeicher bei Anforderung über einen dafür vorgesehenen Verbraucher zu entladen. Demgemäß ist es auch von Vorteil, wenn der Stromspeicher bei Anforderung über einen dafür vorgesehenen Verbraucher entladen wird. Ist ein Austausch des Stromspeichers nötig, so kann eine darin enthaltene Restenergie beispielsweise über einen ohmschen Widerstand abgebaut werden, sodass der Stromspeicher sicher ausgebaut und entsorgt werden kann, ohne dass dadurch Schaden an Mensch oder Maschine droht. Auch wird damit die Verfügbarkeit der Lageranordnung erhöht, da die Entladung des Stromspeichers relativ rasch erfolgen kann. Der Entladevorgang kann beispielsweise mit einem Spannungsmessgerät überwacht und von der elektronischen Schaltung entsprechend quittiert werden, beispielsweise mit der Meldung "Kondensatorspannung < 1V, Ausbau möglich". Beispielsweise kann die Anforderung zur Entladung des Stromspeichers über eine eigens dafür vorgesehene Taste oder einen Schlüsselschalter erfolgen. Die gezielte Entladung des Stromspeichers ist generell nicht nur bei einem Austausch des Stromspeichers hilfreich, sondern allgemein bei Arbeiten am Schaltschrank, da ein Wegschalten der Versorgungsspannung wegen der hohen Restenergie im Stromspeicher in der Regel nicht ausreicht, um sicheres Arbeiten zu gewährleisten.

An dieser Stelle wird angemerkt, dass die Funktionen zum Entladen des Stromspeichers und zum Überwachen der Funktionstüchtigkeit des Stromspeichers nicht notwendigerweise in einer einzigen elektronischen Schaltung/Steuerung kombiniert sind, auch wenn dies von Vorteil ist. Selbstverständlich ist auch der Einsatz gesonderter elektronischer Schaltungen denkbar und insbesondere kann auch nur eine der beiden genannten Funktionen angewandt werden.

Besonders vorteilhaft ist es weiterhin, wenn als Verbraucher ein ohmscher Widerstand und/oder ein Transistor vorgesehen ist. Beispielsweise kann der ohmsche Widerstand mit Hilfe elektromechanischer oder elektronischer Schalter an den Stromspeicher angeschaltet werden. Ein Transistor kann zum Laden/Entladen entsprechend eines gewünschten Lade- /Entladestroms angesteuert und insbesondere getaktet werden. In einer speziellen Ausführungsform kann auch die Temperatur des Transistors oder eines mit diesen verbundenen Kühlkörpers gemessen und die Ladung/Entladung des Stromspeichers anhand der gemessenen Temperatur geregelt werden. Bei steigender Temperatur wird der Strom dementsprechend gesenkt und umgekehrt. Besonders vorteilhaft kann der fiktive Widerstand des Transistors gegen Ende eines Ladevorgangs/Entladevorgangs gesenkt werden, sodass die Ladung/Entladung des Stromspeichers möglichst vollständig erfolgt. Auf diese Weise kann die vom Stromspeicher ausgehende Gefahr weiter reduziert werden. Insbesondere kann der Kondensator mit konstantem Strom entladen werden.

Bei einem vorteilhaften Verfahren zum Bremsen/Anhalten eines Regalbediengeräts mit zumindest einem Antriebsmotor und einer mit dem zumindest einen Antriebsmotor verbundenen Fahrsteuerung/-regelung (engl.: open loop drive control / closed loop drive control) wird der zumindest eine Antriebsmotor bei einer Bremsung von der Fahrsteuerung/-regelung so angesteuert, dass die durch die Bremsung rekuperativ/regenerativ erzeugte Leistung wenigstens der durch die Fahrsteuerung/-regelung verbrauchten/aufgenommenen elektrischen Leistung entspricht, wobei die Fahrsteuerung/-regelung im Bremsbetrieb durch den zumindest einen Antriebsmotor versorgt wird. Dementsprechend ist es von Vorteil, wenn ein Regalbediengerät / eine Lageranordnung eine Fahrsteuerung/-regelung und zumindest einen mit der Fahrsteuerung/-regelung sowohl versorgungsseitig als auch ausgangsseitig verbundenen Antriebsmotor umfasst, wobei die Fahrsteuerung/-regelung für eine Ansteuerung des zumindest einen Antriebsmotors ausgebildet ist, derart dass die durch die Bremsung regenerativ erzeugte Leistung wenigstens der durch die Fahrsteuerung/-regelung verbrauchten/aufgenommenen elektrischen Leistung entspricht und die Fahrsteuerung/-regelung im Bremsbetrieb durch den zumindest einen Antriebsmotor versorgt wird.

Die Bremsung erfolgt also wenigstens so stark, dass die Fahrsteuerung/-regelung, welche die Bremsung bewirkt, bis zum Anhalten des Antriebsmotors oder bis zu einem Zeitpunkt knapp davor betrieben wird. Damit ist ein sicheres Anhalten des Regalbediengeräts über den Antriebsmotor auch ohne das Vorhandensein einer Fahrspannung respektive Versorgungsspannung aus einem (öffentlichen) Versorgungsnetz möglich. Das Vorhandensein eines Stromspeichers ist zwar von Vorteil, aber grundsätzlich ist das Verfahren unabhängig davon, ob und wo ein Stromspeicher für das Regalbediengerät vorgesehen ist. Unabhängig davon ist der Einsatz eines Glättkondensators möglich. Dieser ist an den Eingang der Fahrsteuerung/-regelung geschaltet und glättet die generatorisch erzeugte Versorgungsspannung bei Einsatz von intermittierend schaltenden Leistungsteilen, beispielsweise bei Einsatz von Vierquadrantenstellern. Das Verfahren kann zum Beispiel auf einen Motor für den Fahrantrieb des Regalbediengeräts und/oder beispielsweise auch auf einen Motor für ein Bewegungsglied des Regalbediengeräts angewandt werden.

Ein Bewegungsglied ist generell ein beweglicher Teil des Regalbediengeräts, der zur Manipulation eines Förderobjekts dient. Beispielsweise kann unter einem Antrieb für ein Bewegungsglied ein Vertikalantrieb oder Horizontalantrieb für eine Ladeplattform oder ein Antrieb für eine Lastaufnahmevorrichtung verstanden werden. Dementsprechend kann unter einem Bewegungsglied beispielsweise ein Hubmechanismus, ein Mechanismus zum horizontalen Verfahren respektive Bewegen einer Ladeplattform gegenüber einem Fahrgestell des Regalbediengeräts, ein Verstell- beziehungsweise Bewegungsmechanismus für eine Lastaufnahmevorrichtung (beispielsweise ein Greifmechanismus) oder aber auch ein Förderantrieb auf der Ladeplattform verstanden werden.

Generell muss die Fahrsteuerung/-regelung und/oder ein Stromspeicher nicht notgedrungen Teil des Regalbediengeräts sein, sondern diese können beispielsweise auch in einem stationären Schaltschrank eingebaut sein. Des Weiteren wird darauf hingewiesen, dass die obigen Maßnahmen nicht notgedrungen in Kombination mit den Merkmalen des Patentanspruchs 1 angewandt werden müssen, sondern auch unabhängig davon von Vorteil sind und daher eine eigenständige Erfindung bilden können.

Günstig ist es, wenn die Bremsung bei/über dem genannten Mindestmaß, bei dem die durch die Bremsung rekuperativ/regenerativ erzeugte Leistung der durch die Fahrsteuerung/- regelung verbrauchten/aufgenommenen elektrischen Leistung entspricht, jedenfalls dann durchgeführt wird, wenn ein Ausfall/Abfall der Fahrspannung für das Regalbediengerät festgestellt wird und wenn eine Bremsung bei ausreichend vorhandener Fahrspannung bedarfsweise auch unter dem genannten Mindestmaß erfolgt. Ist die Fahrspannung ausreichend für die Versorgung der Fahrsteuerung/-regelung, so ist deren rekuperative Versorgung durch den Antriebsmotor nicht notwendig, und eine Bremsung kann dementsprechend auch schwächer erfolgen.

Besonders vorteilhaft ist es, wenn die beim Anhalten erreichte Position in einem von der Fahrspannung unabhängig Daten haltenden Speicher gespeichert wird. Dadurch werden das (Wieder-)Hochfahren der Anlage und insbesondere das Anfahren eines Referenzpunktes beim Hochfahren beschleunigt. In aller Regel wird bei einem Hochfahren der Anlage ein Referenzpunkt angefahren, um Positionsgeber (insbesondere Relativweg- oder Relativwinkelgeber) zu initialisieren. Nach dem Stand der Technik wird die Position, an welcher ein Bewegungsglied des Regalbediengeräts beziehungsweise an welcher das Regalbediengerät selbst anhält, bei Ausfall einer Fahrspannung nicht gespeichert. Der Referenzpunkt kann daher nur sehr langsam angefahren werden, da keine Information über die Distanz zwischen der momentanen Position des Bewegungsglieds/Regalbediengeräts und dem Referenzpunkt vorliegt. Durch die vorgeschlagenen Maßnahmen kann jedoch ein Beschleunigungsweg und insbesondere auch ein Bremsweg und somit auch eine maximal mögliche Verfahrgeschwindigkeit vorberechnet und angewendet werden. Das Anfahren eines Referenzpunktes kann daher deutlich schneller erfolgen, als dies im Stand der Technik möglich ist.

Vorteilhaft ist es weiterhin, wenn die Bremsung bei einem Ausfall/Abfall der Fahrspannung für das Regalbediengerät bis zu einem Ende eines Bewegungsbereichs eines durch den zumindest einen Antriebsmotor angetriebenen Bewegungsglieds erfolgt, sofern die Bremsung bei/über dem genannten Mindestmaß erfolgt, bei dem die durch die Bremsung rekuperativ/regenerativ erzeugte Leistung der durch die Fahrsteuerung/-regelung verbrauchten/aufgenommenen elektrischen Leistung entspricht. Dadurch, dass das Regalbediengerät so weit als möglich fährt und gerade so stark bremst, wie es für die Fahrsteuerung/-regelung nötig ist, wird die Beschädigung von empfindlichen Waren (beispielsweise Glas), die vom Regalbediengerät transportiert werden, verhindert.

Vorteilhaft ist es darüber hinaus auch, wenn die Fahrsteuerung/-regelung im Bremsbetrieb die von dem zumindest einen Antriebsmotor regenerativ bereitgestellte Versorgungsspannung überwacht und die Bremsung bei einem Abfall dieser Versorgungsspannung unter einen Spannungs-Grenzwert verstärkt. Bei dieser Ausführungsvariante wird die Versorgungsspannung für die Fahrsteuerung/-regelung also geregelt. Dadurch wird die elektrische Versorgung der Fahrsteuerung/-regelung bei Wegfall einer Fahrspannung besonders gut sichergestellt.

Vorteilhaft ist es auch, wenn der Schaltkontakt des ersten Schützes mit Hilfe eines an dessen Steuerspule geschalteten Haltekondensators geschlossen gehalten wird, bis der Schaltkontakt des zweiten Schützes geschlossen ist. Auf diese Weise kann jene Zeit überbrückt werden, die zum Anschalten des Stromspeichers an die Steuerspule des ersten Schützes benötigt wird. Üblicherweise beträgt die Zeit nur einige wenige Millisekunden. In dieser Zeit wird der erste Schaltkontakt mit Hilfe des Haltekondensators geschlossen gehalten und somit ein kurzfristiger Spannungsausfall an dem Regalbediengerät / den Regalbediengeräten, welcher dort unter Umständen zu Störungen führen könnte, vermieden.

Vorteilhaft ist es darüber hinaus, wenn eine Fahrsteuerung/-regelung des zumindest einen Regalbediengeräts einen Ausfall oder unzulässigen Abfall einer Fahrspannung des zumindest einen Regalbediengeräts detektiert und in Folge einen Anhaltevorgang für das Regalbediengerät und/oder dessen Bewegungsglieder einleitet. Auf diese Weise hält das Regalbediengerät im Notfall autonom an. Ein Ausfall der nicht mehr durch das Betriebs-Stromnetz versorgten Betriebs-Steuerung ist daher nicht gefährlich.

Vorteilhaft ist es aber auch, wenn der Stromspeicher für das zumindest eine Regalbediengerät zugeordnet oder von dieser umfasst ist, bei übermäßigem Spannungsabfall im Betriebs-Stromnetz an die Betriebs-Steuerung geschaltet wird. Auf diese Weise kann auch die Betriebs-Steuerung aktiv einen Befehl zum Anhalten an das Regalbediengerät senden. Die im Regalbediengerät verbaute Fahrsteuerung/-regelung braucht einen Aus- oder Abfall einer Fahrspannung daher nicht unbedingt erkennen und kann somit einfacher aufgebaut sein.

Schließlich ist es auch von besonderem Vorteil, wenn der genannte Stromspeicher an die Steuerspule des zweiten Schützes geschaltet wird, wenn ein Zutritt einer Person zu einem Fahrbereich des Regalbediengeräts / der Regalbediengeräte angefordert oder detektiert wird. Dadurch wird die Steuerspule des zweiten Schützes auch bei Ausfall des Betriebs-Stromnetzes für die Betriebs-Steuerung oder auch bei Ausfall der Fahrspannung elektrisch versorgt, wodurch der Schaltkontakt des zweiten Schützes selbst dann offen gehalten wird. Dadurch bleibt aber auch der erste Schütz offen, wenn die Betriebs-Spannung für die Betriebs-Steuerung ab- oder ausfällt. Ohne diese Maßnahme würde ein Abfall der genannten Betriebs-Spannung in der bereits beschriebenen Weise dagegen ein Schließen des ersten Schützes bewirken. Dadurch könnten das Regalbediengerät in unerwarteter und unerwünschter Weise plötzlich mit der Fahrspannung versorgt werden und sich in Bewegung setzten. Da ein Regalbediengerät unter Umständen einige hundert Kilo wiegt, würden schwere Verletzungen und mitunter der Tod der im Fahrbereich des Regalbediengeräts befindlichen Person drohen. Durch die vorgeschlagenen Maßnahmen wird diese Gefahr jedoch abgewendet.

An dieser Stelle wird angemerkt, dass sich die zu der erfindungsgemäßen Vorrichtung offenbarten Ausführungsvarianten und daraus resultierenden Vorteile sinngemäß auch auf das erfindungsgemäße Verfahren beziehen und umgekehrt.

Zum besseren Verständnis der Erfindung wird diese anhand der nachfolgenden Figuren näher erläutert.

Es zeigen jeweils in stark vereinfachter, schematischer Darstellung:
- Fig. 1: eine beispielhafte und schematisch dargestellte Lageranordnung mit mehreren Mehrebenen-Regalbediengeräten und einer zugeordneten Stromversorgung;
- Fig. 2: einen beispielhaften Schaltplan für eine Stromversorgung mehrerer Regalbediengeräte;
- Fig. 3: eine beispielhafte und schematisch dargestellte Lageranordnung mit mehreren Einebenen-Regalbediengeräten und einem zugeordneten Vertikalförderer mit einem einzigen Stromspeicher;
- Fig. 4: wie Fig. 3, nur mit mehreren Stromspeichern;
- Fig. 5: eine Darstellung einer beweglichen Ladeplattform eines Regalbediengeräts mit einer Lastaufnahmevorrichtung in Draufsicht;
- Fig. 6: einen Schlitten einer Teleskopiereinheit für die Lastaufnahmevorrichtung aus Fig. 5 im Detail;
- Fig. 7: einen Riemen für den Antrieb des Schlittens aus Fig. 5 im Schnitt;
- Fig. 8: eine weitere Lastaufnahmevorrichtung mit nur einem einzigen Riemen zum Antrieb eines zweiten Schlittens in Seitenansicht;
- Fig. 9: eine Anordnung, bei der eine Fahrsteuerung/-regelung des Regalbediengeräts rekuperativ von einem Antriebsmotor versorgt wird und
- Fig. 10: eine Schaltung für den sicheren Betrieb mehrerer Regalbediengeräte bei Stromausfall.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

Wenn im nachfolgenden von Stückgut gesprochen wird, so wird damit eine Packeinheit oder ein Ladehilfsmittel, wie Karton, Behälter oder Tablar verstanden.

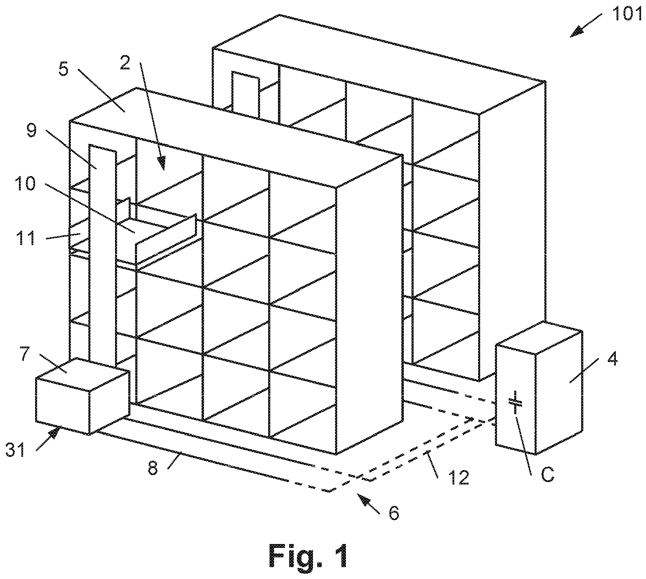

Fig. 1 zeigt eine Lageranordnung 101 mit mehreren Lagerplätzen 2, die nebeneinander und übereinander angeordnet sind, mit mehreren rechnergesteuerten Regalbediengeräten 31, welche relativ zu den Lagerplätzen 2 verfahrbar sind, und mit einer Stromversorgung 4 für die genannten Regalbediengeräte 31. Darüber hinaus umfasst die Lageranordnung 101 einen Stromspeicher C, welcher von der genannten Stromversorgung 4 umfasst ist.

Die Lagerplätze 2 sind in diesem Beispiel in Regalreihen 5 organisiert, welche benachbart zu Regalgassen 6 angeordnet sind und in Tiefenrichtung ein einziges Stückgut (einfachtiefe Lagerung) oder mehrere Stückgüter (mehrfachtiefe Lagerung) aufnehmen können. Die Regalbediengeräte 31 sind als Mehrebenen-Regalbediengeräte ausgeführt und umfassen jeweils ein Fahrgestell 7, das auf Schienen 8 verfahrbar ist, sowie einen Mast 9, welcher mit dem Fahrgestell 7 verbunden ist. In der Fig.1 fährt das Regalbediengerät 31 auf zwei Schienen 8, selbstverständlich kann das Regalbediengerät 31 aber auch nur auf einer Schiene 8 fahren, welche insbesondere als I-Profil ausgebildet ist.

Weiterhin umfasst das genannte Mehrebenen-Regalbediengerät 31 eine auf dem Mast 9 verfahrbare (heb- und senkbare) Ladeplattform 10. Auf der Ladeplattform 10 ist eine Lastaufnahmevorrichtung 11 zum Einlagern der Stückgüter auf die Lagerplätze 2 und Auslagern der Stückgüter von den Lagerplätzen 2 angeordnet und bildet diese eine Aufnahmefläche für zumindest ein Stückgut aus. Ein solches Mehrebenen-Regalbediengerät 31 ist beispielweise in der EP 2 419 365 B1 offenbart und ist Gegenstand dieser Offenbarung. Mit Hilfe der Mehrebenen-Regalbediengeräte 31 können in an sich bekannter Weise Stückgüter in einen Lagerplatz 2 eingelagert oder von diesem ausgelagert werden. Das betreffende Stückgut wird dabei mit Hilfe der Ladeplattform 10 von einer nicht dargestellten Zuförderanlage zu dem Lagerplatz 2 oder vom Lagerplatz 2 zu einer nicht dargestellten Abförderanlage transportiert. Die Zuförderanlage und/oder Abförderanlage können beispielsweise als Rollenförderer ausgebildet sein.

Über Stromleitungen 12 ist die Stromversorgung 4 elektrisch mit den Schienen 8 respektive mit den Mehrebenen-Regalbediengeräten 31 verbunden, sodass elektrische Antriebsmotoren derselben mit elektrischer Energie versorgt werden können. Ein erster Antriebsmotor (Fahrantrieb) dient der Fahrbewegung des Mehrebenen-Regalbediengeräten 31 entlang der Regalgasse 6, ein zweiter Antriebsmotor (Hubantrieb) dient der Heb- und Senkbewegung der Ladeplattform 10 und ein dritter Antriebsmotor (Ein- und Auslagerantrieb) dient der Ein- und Ausfahrbewegung der Lastaufnahmevorrichtung 11. Die Lastaufnahmevorrichtung 11 wiederum kann zumindest einen vierten Antriebsmotor umfassen, welcher der Verstellbewegung eines Transportorgans zum Transport von Stückgütern zwischen dem Lagerplatz 2 und der Ladeplattform 10 dient. Selbstverständlich kann die Stromübertragung auch anders erfolgen, beispielsweise über Schleppkabel. In dem gezeigten Beispiel ist die Stromversorgung 4 zwei Mehrebenen-Regalbediengeräten 31 zugeordnet. Selbstverständlich könnte die Stromversorgung 4 aber auch mehr als zwei Mehrebenen-Regalbediengeräte 31 versorgen, oder es könnte auch je eine Stromversorgung 4 je einem Mehrebenen-Regalbediengerät 31 zugeordnet sein.

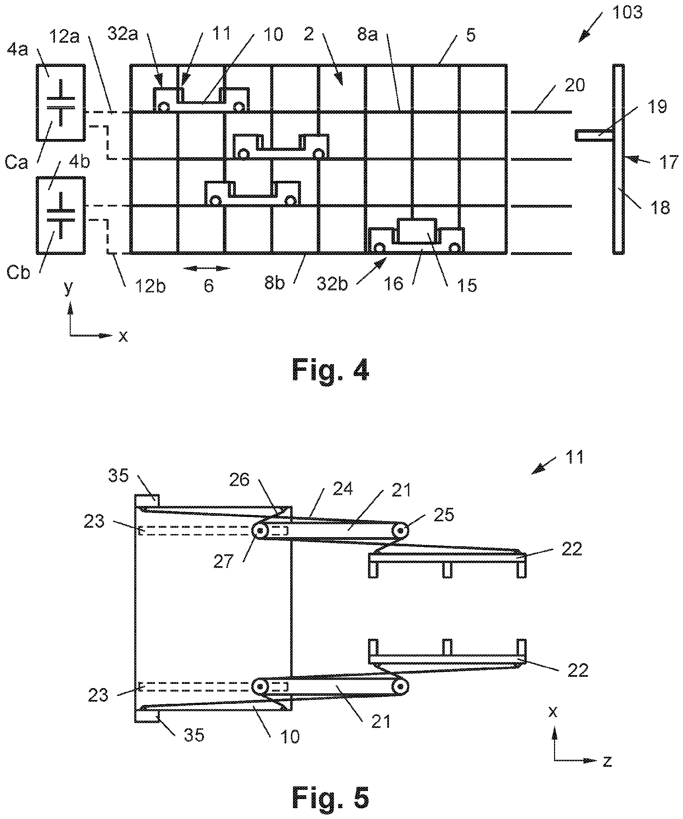

Nach einer möglichen Ausführung umfasst die Lastaufnahmevorrichtung 11 Teleskoparme, welche auf der Ladeplattform 10 angeordnet sind und jeweils senkrecht zur Regalgasse 6 ein/ausfahrbare Schlitten umfassen. Der äußere Schlitten der Teleskoparme umfasst zumindest an seinen gegenüberliegenden Enden angeordnete und relativ zur Ladeplattform 10 verstellbare Transportorgane, mittels welcher ein einzulagerndes oder auszulagerndes Stückgut hintergriffen werden kann. Eine solche Lastaufnahmevorrichtung 11 ist beispielweise aus der DE 20 2004 004 620 U1 und US 6,923,612 B2 bekannt und ist Gegenstand dieser Offenbarung (siehe dazu auch die Fig. 5).

Der Stromspeicher C ist bei dieser Ausführungsvariante direkt in der Stromversorgung 4 in einem gemeinsamen Schaltschrank untergebracht. Selbstverständlich könnte der Stromspeicher C auch in einem gesonderten Gehäuse untergebracht sein. Darüber hinaus wird angemerkt, dass in dem Schaltschrank der Stromversorgung 4 auch andere elektrische/elektronische Geräte zum Betrieb der Mehrebenen-Regalbediengeräte 31 untergebracht sein können, beispielsweise Schutzschalter, Schütze, Steuerungen, Messgeräte und dergleichen. Auch im Mehrebenen-Regalbediengerät 31 können selbstverständlich elektrische/elektronische Geräte zum Betrieb der Mehrebenen-Regalbediengeräte 31 untergebracht sein, insbesondere eine Steuerung für dasselbe.

Der Stromspeicher C dient ganz allgemein dazu, die beim Abbremsen eines Mehrebenen-Regalbediengeräts 31 generatorisch erzeugte Energie zu speichern und bei Bedarf, das heißt beim Beschleunigen dieses oder eines anderen Mehrebenen-Regalbediengeräts 31, wieder abzugeben. Auf diese Weise werden Stromspitzen in der Zuleitung zu der Stromversorgung 4 vermieden, und der Energiebedarf der Lageranordnung 101 wird vermindert. Das Gesagte bezieht sich dabei nicht nur auf das Abbremsen und Beschleunigen des zum Beispiel Fahrgestells 7, sondern grundsätzlich auf alle bewegten Teile des Mehrebenen-Regalbediengeräts 31, insbesondere somit auch auf die Ladeplattform 10.

Wie in der Fig. 1 dargestellt, ist der Stromspeicher C respektive Energiespeicher nicht am Regalbediengerät 31, sondern an einer (stationären) Stromversorgung 4 für die Regalbediengeräte 31 angeschlossen, um von den Antriebsmotoren der Regalbediengeräte 31 generatorisch erzeugte Energie über die (bidirektional wirkende) Stromversorgung in den Stromspeicher C einzuspeisen.

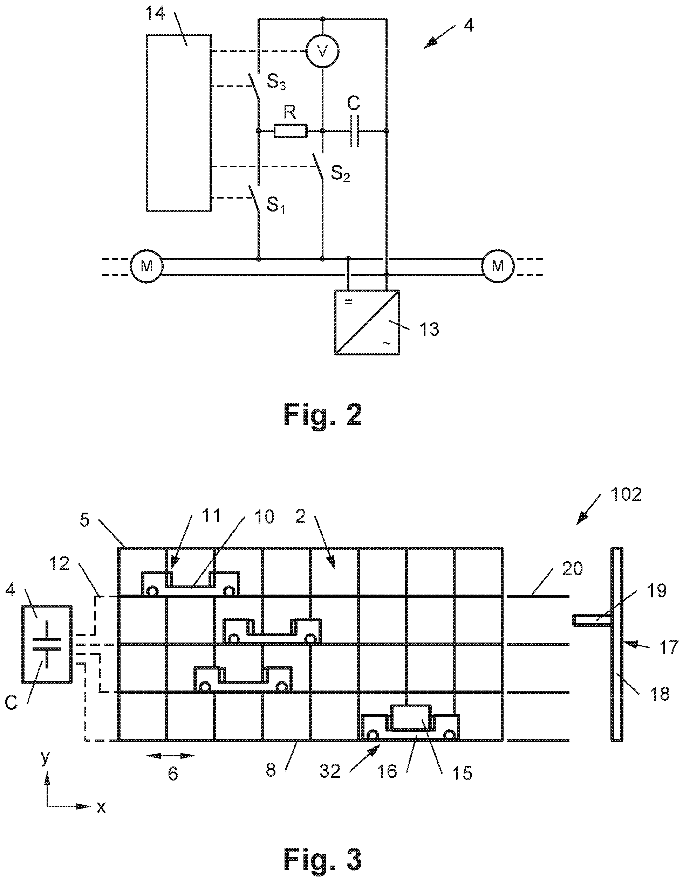

Die Fig. 2 zeigt nun ein schematisches und beispielhaftes elektrisches Schaltbild der Stromversorgung 4. Diese umfasst einen Gleichrichter 13, welcher die aus einem Versorgungsnetz stammende Wechselspannung in eine Gleichspannung für die Antriebsmotoren M der Mehrebenen-Regalbediengeräte 31 umwandelt. Der Gleichrichter 13 ist rein symbolhaft dargestellt und ist daher nicht zwangsläufig als Dioden-Brückengleichrichter zu verstehen, sondern kann auch weitere elektronische Bauteile zur Umwandlung der Wechselspannung auf die Gleichspannung umfassen. Desgleichen wird darauf hingewiesen, dass in der Fig. 2 rein symbolhaft nur zwei Antriebsmotoren M dargestellt sind. Selbstverständlich können von der Stromversorgung 4 auch mehr als zwei Antriebsmotoren M, beispielweise der Antriebsmotor für den Fahrantrieb und Antriebsmotor für den Hubantrieb, versorgt werden.

Die Stromversorgung 4 umfasst zudem drei Schalter S₁..S₃, einen Widerstand R und einen Stromspeicher C, der in diesem Beispiel als Kondensator, insbesondere als Superkondensator respektive Powercap/Supercap ausgebildet ist. Prinzipiell könnte zusätzlich oder alternativ zum Kondensator C auch ein Akkumulator vorgesehen sein. Mit Hilfe des Schalters S₁ kann die Reihenschaltung des Widerstands R und des Kondensators C an die Versorgungsspannung geschaltet werden, mit Hilfe des Schalters S₂ kann der Kondensator C alleine an die Versorgungsspannung geschaltet werden und mit Hilfe des Schalters S₃ kann die Reihenschaltung des Widerstands R und des Kondensators C kurzgeschlossen werden. Zusätzlich umfasst die Stromversorgung 4 ein Spannungsmessgerät V an den Klemmen des Kondensators C sowie eine elektronische Schaltung beziehungsweise Stromspeicher-Steuerung 14 zum Steuern der Schalter S₁..S₃ und zur Erfassung der Spannung am Kondensator C.

Die Funktion der in der Fig. 2 darstellten Stromversorgung 4 ist nun wie folgt, wobei von einem entladenen Zustand des Kondensators C ausgegangen wird.

Zum Laden des Kondensators C wird in einem ersten Schritt der Schalter S₁ geschlossen, die Schalter S₂ und S₃ bleiben offen. Als Folge wird der Kondensator C über den Widerstand R von Null Volt auf eine Nennspannung geladen. Mit Hilfe des Spannungsmessgeräts V kann dieser Vorgang überwacht werden und beispielsweise ein zeitlicher Verlauf der Ladespannung erfasst werden. Ist der Ladevorgang abgeschlossen (beispielsweise kann dafür ein Zielwert für die Nennspannung von 62 V vorgesehen sein), so wird der Schalter S₁ geöffnet und der Schalter S₂ geschlossen, sodass der Kondensator C direkt an die Versorgung der Antriebsmotoren M geschaltet wird. Der Schalter S₃ bleibt nach wie vor offen. Der Stromspeicher C ist nun betriebsbereit und kann die von einem Antriebsmotor M generatorisch erzeugte Energie aufnehmen und bei Bedarf wieder abgeben.

Bei einer Ausführungsvariante kann vorgesehen sein, dass die Regalbediengeräte 31 je nach Ladezustand des Kondensators C mit unterschiedlicher Spannung versorgt werden. Wird elektrische Energie beim Bremsen der Regalbediengeräte 31 aufgenommen, so steigt dementsprechend die Spannung des Kondensators C und damit die Versorgungsspannung der Regalbediengeräte 31 an. Beispielsweise kann die Spannung dabei ein Niveau von 80 V und darüber, beispielsweise bis 100 V, erreichen. Denkbar wäre aber auch, dass die Regalbediengeräte 31 mit konstanter Spannung versorgt werden und die Spannungsanpassung zum Kondensator C hin mit einem Hochsetzsteller und/oder Tiefsetzsteller bewerkstelligt wird.

Der Kondensator C unterliegt einer gewissen Alterung, beziehungsweise kann seine Speicherfähigkeit auch durch äußere Einflüsse teilweise oder ganz verlieren, weswegen der Zustand des Kondensators C in einer vorteilhaften Ausführungsvariante der Erfindung überwacht wird. Zur Überwachung des Kondensators C stehen mehrere Möglichkeiten zur Verfügung.

Beispielsweise kann bei Inbetriebnahme der Lageranordnung 101 ermittelt werden, wie hoch die Spannung am Kondensator C im Betrieb maximal werden kann. Dazu werden die Regalbediengeräte 31 (vorzugsweise mit der maximalen Last) beladen, in Bewegung versetzt und sodann gleichzeitig abgebremst. Somit wird die maximal auftretende Bremsenergie in den Kondensator C geladen, an welchem in Folge die maximal im Betrieb auftretende Kondensatorspannung anliegt. In Folge wird im laufenden Betrieb überprüft, ob die Kondensatorspannung diese Maximalspannung (oder einen von dieser abgeleiteten Schwellwert) überschreitet. Ist dies der Fall, so kann wegen U=Q/C davon ausgegangen werden, dass die Kapazität C des Kondensators gesunken ist, wobei Q die elektrische gespeicherte Energie bezeichnet. In Folge kann ein Alarmsignal ausgegeben werden. Denkbar ist in diesem Zusammenhang auch, dass die Regalbediengeräte 31 wiederkehrend gezielt gleichzeitig abgebremst werden, um den Zustand des Kondensators C zu ermitteln. Im Prinzip ist es aber ausreichend, im Betrieb einfach laufend zu überwachen, ob die oben genannte Maximalspannung respektive ein davon abgeleiteter Schwellwert überschritten wird. Durch die permanente Kontrolle der Ladespannung kann unter Berücksichtigung der Herstellerdaten auch ermittelt werden, wie weit der Alterungsprozess des Kondensators C fortgeschritten ist. Demzufolge ist ein Verfahren von Vorteil,
- bei dem ein Kondensator C auf eine Nennspannung aufgeladen wird,
- bei dem die dem Kondensator C zugeordneten Regalbediengeräte 31 in Bewegung versetzt und im Wesentlichen gleichzeitig abgebremst werden,
- bei dem die nach dem Bremsen am Kondensator C anliegende Maximalspannung ermittelt wird,
- bei dem die im laufenden Betrieb am Kondensator C anliegenden Spannung gemessen wird und
- bei dem ein Alarmsignal ausgegeben wird, wenn die gemessene Spannung über der genannten Maximalspannung oder einem von dieser abgeleiteten Schwellwert liegt.

In einer anderen Ausführungsvariante wird ein zeitlicher Verlauf der Ladespannung des Kondensators C beim initialen Laden oder auch im normalen Betrieb ermittelt. Entspricht dieser Verlauf nicht einem Sollverlauf, so kann ein Alarmsignal ausgelöst werden, um das Bedienpersonal entsprechend zu informieren. Eine weitere Möglichkeit besteht darin, die Ladespannung als solche dahingehend zu überwachen, ob sie einen gewissen Sollwert erreicht. Ist dies nicht der Fall, so kann wiederum ein Alarmsignal ausgelöst werden. Darüber hinaus kann im laufenden Betrieb der Kondensator C testweise über den Widerstand R entladen werden. Dazu wird der Schalter S₂ geöffnet und der Schalter S₃ geschlossen. Entspricht dieser Verlauf nicht einem Sollverlauf, so kann wiederum ein Alarmsignal ausgelöst werden. Selbstverständlich kann dazu auch die Entladekurve im normalen Betrieb ausgewertet werden.

Die oben angesprochene Alarmierung kann je nach Zustand des Kondensators C gestaffelt erfolgen. Beispielsweise kann eine frühe Warnung "Leistungsaufnahmevermögen des Stromspeichers 95%" lauten. Bei weiter fortschreitender Degradation kann eine Alarmierung beispielsweise "Leistungsaufnahmevermögen des Stromspeichers 80% - Ersatzteil besorgen" lauten. Schließlich kann der Betreiber der Anlage aufgefordert werden den Stromspeicher C zu tauschen, etwa mit der Meldung "Leistungsaufnahmevermögen des Stromspeichers unter 70% - Austausch erforderlich".

Ist ein Austausch des Kondensators C nötig, so kann eine darin enthaltene Restenergie über den Widerstand R abgebaut werden, sodass der Kondensator C sicher ausgebaut und entsorgt werden kann, ohne dass dadurch Schaden an Mensch oder Maschine droht. Dazu wird der Schalter S₂ geöffnet und der Schalter S₃ geschlossen. Dadurch wird der Kondensator C über den Widerstand R entladen. Der Entladevorgang kann mit dem Spannungsmessgerät V überwacht und von der elektronischen Stromspeicher-Schaltung/Steuerung 14 entsprechend quittiert werden, beispielsweise mit der Meldung "Kondensatorspannung < 1V, Ausbau möglich". Beispielsweise kann die Anforderung zur Entladung des Kondensators C über eine eigens dafür vorgesehene Taste oder einen Schlüsselschalter erfolgen.

In dem oben angeführten Beispiel ist für die Ladung und Entladung des Kondensators C ein einziger Widerstand R vorgesehen. Dies ist zwar vorteilhaft, jedoch nicht zwingend. Denkbar wäre auch, dass für die Ladung und Entladung des Kondensators C zwei (unterschiedliche) Widerstände R vorgesehen sind. Auf diese Weise können Ladung und Entladung des Kondensators C mit unterschiedlichen Strömen und unterschiedlich schnell erfolgen.

Zusätzlich zu den oben angesprochenen Maßnahmen kann ein Alarm auch dazu führen, dass die Mehrebenen-Regalbediengeräte 31 außer Betrieb genommen werden oder nur mehr ein eingeschränkter Betrieb zugelassen wird, um Schäden an denselben zu vermeiden. Wie weiter oben schon angesprochen wurde, kann ein kaputter oder nur eingeschränkt nutzbarer Stromspeicher C dazu führen, dass die elektrische Energie beim Abbremsen der Mehrebenen-Regalbediengeräte 31 nicht in entsprechender Weise abgeführt werden kann und daher eine erwünschte Bremswirkung ausbleibt oder nur eingeschränkt vorliegt. Mit anderen Worten verringert eine eingeschränkte Leistungsfähigkeit des Stromspeichers C das Bremsvermögen respektive die Bremsleistung der Mehrebenen-Regalbediengeräte 31. Dadurch können schwere Schäden an der Anlage entstehen, beispielsweise wenn eine schwere Last nach einem Absenkvorgang nicht entsprechend angehalten werden kann und auf das Fahrgestell 7 des Mehrebenen-Regalbediengeräts 31 aufschlägt. Durch die vorgeschlagenen Maßnahmen können solche Unfälle jedoch verhindert werden.

Generell können die in dem Beispiel der Fig. 2 verwendeten Schalter S₁..S₃ beispielsweise als elektromechanische Schalter (Relais, Schütz) ausgeführt oder auch als elektronischer Schalter, beispielsweise als Leistungstransistor ausgebildet sein. Auch anstelle des Widerstands R oder zusätzlich dazu kann ein Transistor als elektronische Last vorgesehen sein. Insbesondere ist es auch möglich, dass die Schalter S₁ und S₃ die Funktion des Schaltens und der Last übernehmen. Zum Laden/Entladen können die Transistorschalter S₁/S₃ entsprechend eines gewünschten Stroms angesteuert und insbesondere getaktet werden. In einer speziellen Ausführungsform kann auch die Temperatur eines Transistorschalters S₁/S₃ oder eines mit diesen verbundenen Kühlkörpers gemessen und die Ladung/Entladung des Stromspeichers C anhand der gemessenen Temperatur geregelt werden. Bei steigender Temperatur wird der Strom dementsprechend gesenkt und umgekehrt. Besonders vorteilhaft kann der fiktive Widerstand gegen Ende eines Ladevorgangs/Entladevorgangs gesenkt werden, sodass die Ladung/Entladung des Kondensators C möglichst vollständig erfolgt. Auf diese Weise kann die Belastung des Schalters S₂ beim Anschalten des Kondensators C auf die Gleichspannungsversorgung verringert und/oder die Gefahr beim Ausbau des Kondensators C gesenkt werden. Auch eine Entladung mit konstantem Strom ist selbstverständlich möglich.

Die Stromspeicher-Steuerung 14 kann generell als analoge Schaltung, digitale Schaltung oder als Mischform einer analogen Schaltung und einer digitalen Schaltung ausgebildet sein. Insbesondere kann diese einen Mikroprozessor aufweisen, welche die oben angeführten Verfahrensschritte bei Ausführung eines entsprechenden Programms abarbeitet.

In dem obigen Beispiel wurde davon ausgegangen, dass die Regalbediengeräte 31 als Mehrebenen-Regalbediengeräte ausgeführt und die Stromversorgung 4 und der Stromspeicher C den Regalbediengeräten 31 mehrerer Regalgassen 6 zugeordnet sind. Dies ist aber keineswegs die einzig vorstellbare Möglichkeit. So kann die Lageranordnung 101 auch nur eine Regalgasse 6 aufweisen. Auch ist es möglich, dass in der einzigen Regalgasse 6 oder den mehreren Regalgassen 6 in übereinander liegenden Ebenen jeweils zumindest ein (oben beschriebenes) Mehrebenen-Regalbediengerät 31 angeordnet ist. Dadurch ergeben sich Lagerbereiche, in welchen die Lagerplätze 2 vorhanden sind, denen jeweils ein Mehrebenen-Regalbediengerät zugeordnet ist. In dieser Ausführung ist die Stromversorgung 4 und der Stromspeicher C mehreren Mehrebenen-Regalbediengeräten 31 einer Regalgasse 6 zugeordnet. Ist nur eine Regalgasse 6 und ein Mehrebenen-Regalbediengerät 31 in dieser Regalgasse 6 vorgesehen, so ist die Stromversorgung 4 und der Stromspeicher C nur diesem Mehrebenen-Regalbediengerät 31 zugeordnet.

Denkbar ist auch, dass die Regalbediengeräte als Einebenen-Regalbediengeräte ausgeführt sind. Insbesondere können die Stromversorgung 4 und der Stromspeicher C Einebenen-Regalbediengeräten mehrerer Ebenen einer Regalgasse 6 zugeordnet sein, wobei die Lagerplätze 2 wiederum in Regalreihen 5 organisiert sind, welche benachbart zu zumindest einer Regalgasse 6 angeordnet sind.

Fig. 3 zeigt dazu ein Beispiel einer Lageranordnung 102 mit einer Regalreihe 5 mit mehreren Lagerplätzen 2, die in vier Ebenen angeordnet sind. In jeder Ebene ist ein Einebenen-Regalbediengerät 32 vorgesehen, welches Stückgüter 15 von und zu den Lagerplätzen 2 einer Ebene befördern kann. Die Regalbediengeräte 32 sind als Einebenen-Regalbediengeräte ausgeführt und umfassen jeweils ein Fahrgestell 16, das auf Schienen 8 verfahrbar ist, sowie eine Ladeplattform 10. Auf der Ladeplattform 10 ist eine Lastaufnahmevorrichtung 11 zum Einlagern der Stückgüter 15 auf die Lagerplätze 2 und Auslagern der Stückgüter 15 von den Lagerplätzen 2 angeordnet und bildet diese eine Aufnahmefläche für zumindest ein Stückgut 15 aus. Ein solches Einebenen-Regalbediengerät 32 und eine solche Lastaufnahmevorrichtung 11 sind beispielweise in der WO 2013/090970 A2 oder EP 2 351 698 B1 offenbart und sind Gegenstand dieser Offenbarung.

Die Lastaufnahmevorrichtung 11 umfasst Teleskoparme, welche auf der Ladeplattform 10 angeordnet sind und jeweils senkrecht zur Regalgasse 6 ein/ausfahrbare Schlitten umfassen. Der äußere Schlitten der Teleskoparme umfasst an seinen gegenüberliegenden Enden und dazwischen angeordnete und relativ zur Ladeplattform 10 verstellbare Transportorgane, mittels welcher ein einzulagerndes oder auszulagerndes Stückgut 15 hintergriffen werden kann (siehe auch Fig. 5).

Auch wenn die gezeigte Ausführung in jeder Ebene ein Einebenen-Regalbediengerät 32 umfasst, ist es genauso gut möglich, dass nur einige der Ebenen ein Einebenen-Regalbediengerät 32 umfassen. In diesem Fall ist eine Hebevorrichtung für Einebenen-Regalbediengeräte 32 vorgesehen, welche ein Einebenen-Regalbediengerät 32 von einer Ebene übernehmen und auf eine andere Ebene umsetzen kann. Eine solche Hebevorrichtung ist beispielweise in der WO 2012/106744 A1 beschrieben.

Zusätzlich ist der Regalreihe 5 ein Lift 17 vorgelagert, welcher einen Mast 18 und eine darauf verfahrbare Ladeplattform 19 aufweist. Beim Einlagervorgang wird ein einzulagerndes Stückgut 15 von der Ladeplattform 19 auf eine Bereitstellvorrichtung 20 abgegeben. Dieses Stückgut 15 verbleibt solange auf der Bereitstellvorrichtung 20 bis das Einebenen-Regalbediengerät 32 das Stückgut 15 abholt. Das Einebenen-Regalbediengerät 32 übernimmt das Stückgut 15 und fördert es zu seinem Lagerplatz 2. Beim Auslagern erfolgt der dazu umgekehrte Vorgang. Die Kombination der Einebenen-Regalbediengeräte 32 und des Lifts 17 erfüllen dabei im Wesentlichen dieselbe Funktion wie ein Mehrebenen-Regalbediengerät 31. Anstelle des Lifts 17 kann beispielsweise auch ein Paternoster vorgesehen sein.

Über Stromleitungen 12 ist die Stromversorgung 4 elektrisch mit den Schienen 8 respektive mit den Einebenen-Regalbediengeräten 32 je Ebene verbunden, sodass elektrische Antriebsmotoren derselben mit elektrischer Energie versorgt werden können. Ein erster Antriebsmotor (Fahrantrieb) dient der Fahrbewegung eines Einebenen-Regalbediengeräts 32 entlang der Regalgasse 6, ein zweiter Antriebsmotor (Ein- und Auslagerantrieb) dient der Ein- und Ausfahrbewegung der Lastaufnahmevorrichtung 11. Die Lastaufnahmevorrichtung 11 wiederum kann zumindest einen dritten Antriebsmotor umfassen, welcher der Verstellbewegung eines Transportorgans zum Transport von Stückgütern zwischen dem Lagerplatz 2 und der Ladeplattform 10 dient.

Selbstverständlich kann die Stromübertragung auch anders erfolgen, beispielsweise über eine Schleifleitung, wie dies beispielweise in der WO 2013/090970 A2 beschrieben ist. In dem gezeigten Beispiel ist die Stromversorgung 4 allen Einebenen-Regalbediengeräten 32 zugeordnet.

Das zu den Figuren 1 und 2 Gesagte gilt nun sinngemäß auch für die Ausführungsform nach Fig. 3, wobei die Stromversorgung 4 und der Stromspeicher C Regalbediengeräten 32 mehrerer Ebenen einer Regalgasse 6 zugeordnet sind. Zusätzlich können die Stromversorgung 4 und der Stromspeicher C auch dem Lift 17 zugeordnet sein und dessen generatorisch erzeugte Energie verwerten.

Wie Fig. 4 zeigt, ist es in einer Ausführung auch möglich, dass über erste Stromleitungen 12a eine erste Stromversorgung 4a elektrisch mit den Schienen 8a respektive mit den ersten Einebenen-Regalbediengeräten 32a verbunden ist, sodass elektrische Antriebsmotoren derselben mit elektrischer Energie versorgt werden können. Über zweite Stromleitungen 12b ist eine zweite Stromversorgung 4b elektrisch mit den Schienen 8b respektive mit den zweiten Einebenen-Regalbediengeräten 32b verbunden, sodass elektrische Antriebsmotoren derselben mit elektrischer Energie versorgt werden können.

Wie diese Ausführung zeigt, sind mehreren Einebenen-Regalbediengeräten 32a einer ersten Gruppe eine erste Stromversorgung 4a und ein erster Stromspeicher Ca sowie mehreren Einebenen-Regalbediengeräten 32b einer zweiten Gruppe eine zweite Stromversorgung 4b und ein zweiter Stromspeicher Cb zugeordnet. Die ersten Einebenen-Regalbediengeräte 32a und zweiten Einebenen-Regalbediengeräten 32b befinden sich dabei in derselben Regalgasse 6. Die beim Bremsen von einem ersten Einebenen-Regalbediengerät 32a generatorisch erzeugte elektrische Energie wird im ersten Stromspeicher Ca gespeichert und zu einem späteren Zeitpunkt für das Beschleunigen dieses oder eines anderen ersten Einebenen-Regalbediengeräts 32a herangezogen. Die beim Bremsen von einem zweiten Einebenen-Regalbediengerät 32b generatorisch erzeugte elektrische Energie wird im zweiten Stromspeicher Cb gespeichert und zu einem späteren Zeitpunkt für das Beschleunigen dieses oder eines anderen zweiten Einebenen-Regalbediengeräts 32b herangezogen. Die ersten Einebenen-Regalbediengeräte 32a und zweiten Einebenen-Regalbediengeräte 32b entsprechen jenen Einebenen-Regalbediengeräten 32, wie sie in Fig. 3 beschrieben wurden.

Diese Ausführung erweist sich insbesondere bei großen Lageranordnungen 103 von Vorteil, da im Störfall an einer Stromversorgung 4a, 4b und/oder einem Stromspeicher Ca, Cb nur jene Gruppe von Einebenen-Regalbediengeräten 32a, 32b stillgesetzt werden muss, welche der Stromversorgung 4a, 4b und/oder der Stromspeicher Ca, Cb zugeordnet ist. Die andere(n) Gruppen von Einebenen-Regalbediengeräten 32a, 32b können weiterhin normal betrieben werden. Dadurch wird eine hohe Anlagenverfügbarkeit der Lageranordnung 103 erreicht.

Das zu den Figuren 1 und 2 Gesagte gilt nun sinngemäß auch für die Ausführungsform nach Fig. 4, wobei die Stromversorgungen 4a und 4b und die Stromspeicher Ca und Cb jeweils einer Gruppe von Einebenen-Regalbediengeräten 32a und 32b einer Regalgasse 6 zugeordnet sind. Zusätzlich kann eine Stromversorgung 4a, 4b und ein Stromspeicher Ca, Cb auch dem Lift 17 zugeordnet sein und dessen generatorisch erzeugte Energie verwerten.

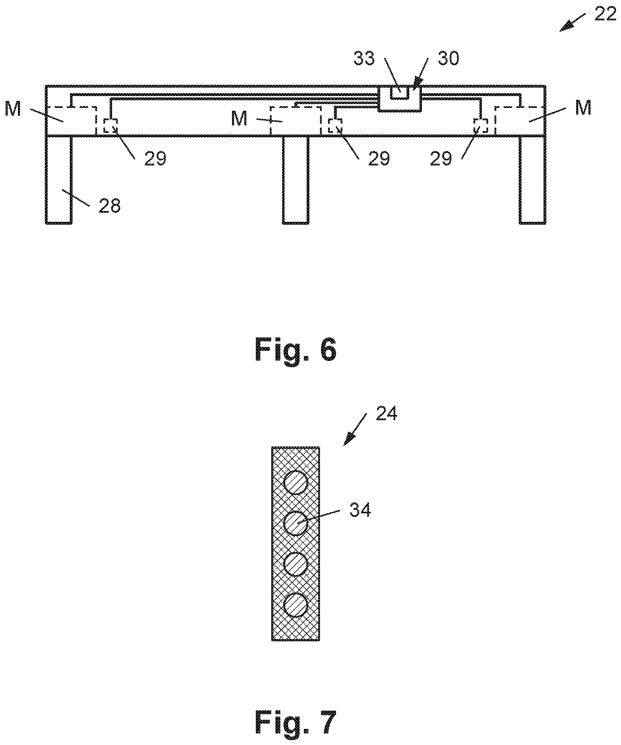

Die Figuren 5 und 6 zeigen nun eine mögliche Ausführungsform einer Lastaufnahmevorrichtung 11 zum Einlagern von Stückgütern 15 auf die Lagerplätze 2 und Auslagern von Stückgütern 15 aus den Lagerplätzen 2. Diese kann auf der horizontal und vertikal (x- und y-Richtung) beweglichen Ladeplattform 10 des Mehrebenen-Regalbediengeräts 31 oder auf der ausschließlich horizontal (x-Richtung) beweglichen Ladeplattform 10 des Einebenen-Regalbediengeräts 32, 32a, 32b montiert sein. Ebenso kann diese Lastaufnahmevorrichtung 11 auf der heb- und senkbaren Ladeplattform 19 des stationären Lifts 17 montiert sein, wobei die Lastaufnahmevorrichtung 11 in diesem Fall ein Stückgut 15 zwischen der Ladeplattform 19 und einer Bereitstellvorrichtung 20 transportieren kann.

Die Lastaufnahmevorrichtung 11 zum Einlagern von Stückgütern 15 auf die Lagerplätze 2 und Auslagern von Stückgütern 15 aus den Lagerplätzen 2 umfasst parallel zueinander auf der Ladeplattform 10 angeordnete Teleskopiereinheiten, welche jeweils relativ gegenüber der Ladeplattform 10 horizontal in einer Richtung (z-Richtung) ein- bzw. ausfahrbaren Schlitten 21, 22 umfasst. Die Teleskopiereinheiten bilden Teleskoparme.

Konkret ist der erste Schlitten 21 auf der Ladeplattform 10 verschiebbar gelagert, und der zweite Schlitten 22 ist am ersten Schlitten 21 verschiebbar gelagert.

Der erste Schlitten 21 kann mit Hilfe einer durch strichlierte Linien schematisch eingetragenen Antriebsvorrichtung 23, beispielweise mit einem nicht dargestellten Linearantrieb (z.B. Pneumatikzylinder, Hydraulikzylinder, Spindelantrieb, Kettentrieb, Zahnleistenanordnung etc.) gegenüber der Ladeplattform 10 bewegt werden.

Ein erster Riemen 24 ist um eine am ersten Schlitten 21 gelagerte erste Rolle 25 umgelenkt und mit seinem ersten Ende an der Ladeplattform 10 und mit seinem zweiten Ende am zweiten Schlitten 22 befestigt. Ein zweiter Riemen 26 ist um eine am ersten Schlitten 21 gelagerte zweite Rolle 27 umgelenkt und mit seinem ersten Ende an der Ladeplattform 10 und mit seinem zweiten Ende am zweiten Schlitten 22 befestigt. Wird der erste Schlitten 21 bewegt, so wird auch der zweite Schlitten 22 über die Riemen 24, 26 mit bewegt, also ein- bzw. ausgefahren. Fig. 5 zeigt die fast vollständig ausgefahrenen Teleskopiereinheiten.

Eine solche Lastaufnahmevorrichtung 11 ist beispielsweise auch schon in der DE 20 2004 004 620 U1 gezeigt und ist Gegenstand dieser Offenbarung.

Der zweite Schlitten 22, wie er in vergrößerter Darstellung in Fig. 6 gezeigt ist, umfasst nach gezeigtem Ausführungsbeispiel eine Vielzahl an Antriebsmotoren M für Transportorgane 28 zum Transport von Stückgütern 15 zwischen dem Lagerplatz 2 und der Ladeplattform 10 sowie gegebenenfalls Sensoren 29 und ein elektronisches Steuermodul 30. Die Transportorgane 28 sind beispielsweise Mitnahmeorgane, wobei jedes Mitnahmeorgan mit einem Antriebsmotor M gekuppelt und über diesen zwischen einer Ruhestellung und Betätigungsstellung bewegbar ist. Die Sensoren 29 können dafür vorgesehen sein, die Schaltstellungen der Transportorgane 28 zu erfassen. Anderenfalls können die Sensoren 29 auch dafür vorgesehen sein, einen Belegungszustand auf der Ladeplattform 10 oder auf einem Lagerplatz 2 zu erfassen. Die Sensoren 29 sind beispielsweise Näherungssensoren oder Lichtschranken.

Die Antriebsmotoren M und Sensoren 29 sind über fest verdrahtete Leitungen an das Steuermodul 30 angeschlossen. Das Steuermodul 30 umfasst außerdem einen Buskoppler 33.

An dieser Stelle wird angemerkt, dass die in den Figuren 5 und 6 dargestellte Anordnung stark vereinfacht ist und in der Realität auch mehr Teile als dargestellt umfassen oder auch anders aufgebaut sein kann.

Vorteilhaft ist es nun, wenn in den Riemen 24, 26 Mittel 34 zur leitungsbasierten Datenübertragung eingebettet sind, insbesondere Drähte, Kabel oder Lichtleitfasern, wie in Fig. 7 gezeigt. Vorzugsweise sind die Mittel 34 zur leitungsbasierten Datenübertragung durch die Festigkeitsträger in den Riemen 24, 26 gebildet. Auf diese Weise übernimmt jeder Riemen eine Doppelfunktion, und ein gesondertes Datenübertragungskabel kann entfallen. Besonders vorteilhaft ist es dabei, wenn die (bidirektionale) Datenübertragung über ein Busprotokoll erfolgt, da auf diese Weise die Anzahl der für die Datenkommunikation benötigten Mittel gering gehalten werden kann. Das heißt, für die Datenübertragung auch zu vielen Sensoren 29 und/oder Antriebsmotoren M sind nur wenige Drähte, Kabeln oder Lichtleitfasern vonnöten.

Auf der Ladeplattform 10 ist ebenso je Teleskopiereinheit ein Buskoppler 35 angeordnet, und über die Buskoppler 33 und 35 kann eine Kommunikationsverbindung zwischen einer nicht dargestellten Betriebs-Steuerung des Mehrebenen-Regalbediengeräts 31 bzw. Einebenen-Regalbediengeräts 32 und dem Motor M und/oder dem Sensor 29 aufgebaut werden. Dazu werden die auszutauschenden Daten mit Hilfe der Buskoppler 33 und 35 in Datenübertragungs-Mittel 34 eingekoppelt oder aus diesen ausgekoppelt.

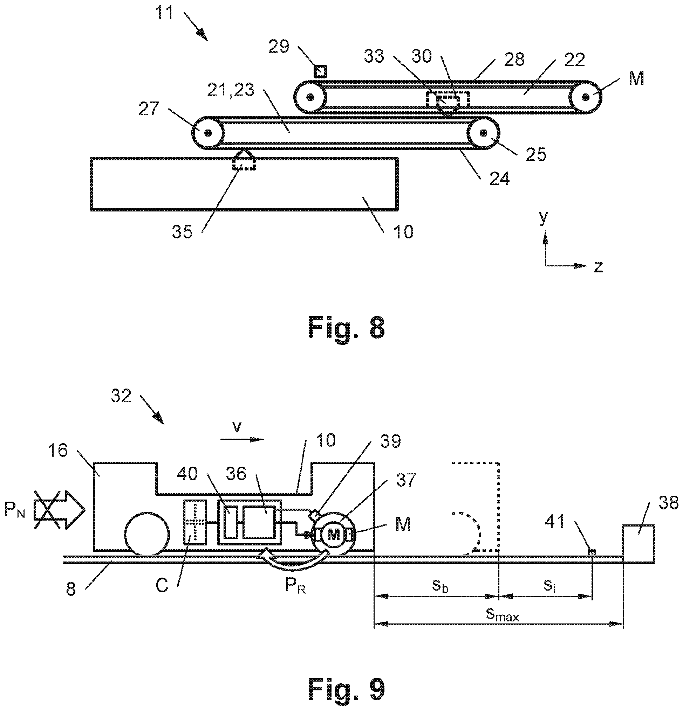

In einer anderen in Fig. 8 gezeigten Ausführung umfasst die Lastaufnahmevorrichtung 11 zum Einlagern von Stückgütern 15 auf die Lagerplätze 2 und Auslagern von Stückgütern 15 aus den Lagerplätzen 2 eine (einzige) auf der Ladeplattform 10 angeordnete Teleskopiereinheit, welche relativ gegenüber der Ladeplattform 10 horizontal in einer Richtung (z-Richtung) ein- bzw. ausfahrbaren Schlitten 21, 22 umfasst. Die Teleskopiereinheit bildet einen Telekoptisch. Der erste Schlitten 21 ist wiederum mit einer Antriebsvorrichtung 23 gekoppelt, die in der Fig. 8 nicht explizit dargestellt ist. Ein (einziger) Riemen 24 ist derart um am ersten Schlitten 21 in gegenüberliegenden Endbereichen gelagerte Rollen 25, 27 geführt und an der Ladeplattform 10 und am zweiten Schlitten 22 befestigt, dass der zweite Schlitten 22 bei Bewegung des ersten Schlittens 21 ein- bzw. ausfährt.

Der zweite Schlitten 22 kann ein an diesem gelagertes Transportband für ein Stückgut 15, welches mit einem Antriebsmotor M gekuppelt ist, umfassen. Das Transportband entspricht einem Transportorgan 28 zum Transport von Stückgütern 15 zwischen dem Lagerplatz 2 und der Ladeplattform 10. Gegebenenfalls kann der zweite Schlitten 22 einen oder mehrere Sensoren 29, beispielsweise Lichtschranken, aufweisen, welche(r) einen Belegungszustand auf dem Transportband 28 oder auf einem Lagerplatz 2 erfassen kann. Außerdem ist der zweite Schlitten 22 mit einem elektronischen Steuermodul 30 versehen. Der Antriebsmotor M und gegebenenfalls der Sensor 29 sind über fest verdrahtete Leitungen an das Steuermodul 30 angeschlossen.

Das Steuermodul 30 umfasst außerdem einen Buskoppler 33. Ebenso ist auf der Ladeplattform 10 ein (einziger) Buskoppler 35 angeordnet, und es kann über die Buskoppler 33 und 35 eine Kommunikationsverbindung zwischen einer nicht dargestellten Betriebs-Steuerung des Mehrebenen-Regalbediengeräts 31 bzw. Einebenen-Regalbediengeräts 32 und dem Motor M und gegebenenfalls dem Sensor 29 aufgebaut werden. Dazu werden die auszutauschenden Daten mit Hilfe der Buskoppler 33 und 35 in Datenübertragungs-Mittel 34 eingekoppelt oder aus diesen ausgekoppelt. Vorteilhaft ist es nun, wenn im Riemen 24 die Mittel 34 zur leitungsbasierten Datenübertragung eingebettet sind, insbesondere Drähte, Kabel oder Lichtleitfasern, wie oben beschrieben.

Im Endergebnis resultiert eine Lastaufnahmevorrichtung 11 zum Einlagern von Stückgütern 15 auf die Lagerplätze 2 und Auslagern von Stückgütern 15 aus den Lagerplätzen 2, insbesondere für ein Regalbediengerät 31, 32, 32a, 32b einer Lageranordnung 101..103, umfassend:
- eine Ladeplattform 10 für zumindest ein Stückgut 15, welche zumindest horizontal in einer ersten Richtung (x-Richtung) zwischen den Lagerplätzen 2 bewegbar ist, und
- zumindest eine Teleskopiereinheit, welche auf der Ladeplattform 10 angeordnet ist und einen relativ gegenüber der Ladeplattform 10 horizontal in einer zweiten Richtung (z-Richtung) ein- bzw. ausfahrbaren Schlitten 21, 22 umfasst,
- wobei der erste Schlitten 21 über eine Antriebsvorrichtung 23 angetrieben und auf der Ladeplattform 10 gelagert ist, und
- wobei der zweite Schlitten 22 über zumindest einen Riemen 24, 26 angetrieben und am ersten Schlitten 21 gelagert ist, und
- wobei der zumindest eine Riemen 24, 26 mit dem ersten Schlitten 21 bewegungsgekoppelt und mit der Ladeplattform 10 und dem zweiten Schlitten 22 verbunden ist, und
- wobei der zweite Schlitten 22 mit einem oder mehreren Antriebsmotoren M für ein oder mehrere Transportorgane 28 zum Transport von Stückgütern 15 zwischen dem Lagerplatz 2 und der Ladeplattform 10 und/oder einem oder mehreren Sensoren 29 sowie einem elektronischen Steuermodul 30 versehen ist, und
- wobei der zumindest eine Riemen 24, 26 Mittel 34 zur leitungsbasierten Datenübertragung, insbesondere Drähte, Kabel oder Lichtleitfasern, umfasst, und
- wobei die Mittel 34 zur leitungsbasierten Datenübertragung mit einem ersten Buskoppler 33, welchen das Steuermodul 30 umfasst, und einem zweiten Buskoppler 35, welcher an der Ladeplattform 10 angeordnet ist, verbunden sind und dass die Datenübertragung über ein Busprotokoll erfolgt, beispielsweise über das CAN-Busprotokoll (Controller Area Network), und
- wobei der zumindest eine Antriebsmotor M und gegebenenfalls der zumindest eine Sensor 29 an das Steuermodul 30 angeschlossen ist / sind.

An dieser Stelle wird darauf hingewiesen, dass sich die obige Anordnung nicht nur für ein Einebenen-Regalbediengerät 32 eignet, sondern auch für andere Fördermittel mit einer Ladeplattform, insbesondere auch für ein Mehrebenen-Regalbediengerät 31 und einen Lift 17. Des Weiteren wird darauf hingewiesen, dass die obigen Maßnahmen nicht notgedrungen in Kombination mit den Merkmalen des Patentanspruchs 1 angewandt werden müssen, sondern auch unabhängig davon von Vorteil sind und daher eine eigenständige Erfindung bilden können.

Fig. 9 zeigt nun ein weiteres Beispiel für ein Regalbediengerät 32, das Teil einer Lageranordnung sein kann, beispielsweise Teil einer Lageranordnung wie in den Figuren 1 bis 4 dargestellt. Das Regalbediengerät 32 umfasst eine Fahrsteuerung/-regelung 36 und einen mit der Fahrsteuerung/-regelung 36 sowohl versorgungsseitig als auch ausgangsseitig verbundenen (und gegebenenfalls geregelten) Antriebsmotor M, welcher ein Antriebsrad 37 antreibt. Die Fahrsteuerung/-regelung 36 dient in diesem Beispiel primär als der Steuerung/Regelung von einem Antriebsmotor M oder von mehreren Antriebsmotoren M des Regalbediengeräts 32, kann selbstverständlich aber auch andere Aufgaben übernehmen. Weiterhin ist das Regalbediengerät 32 dazu ausgebildet, die durch eine Bremsung rekuperativ erzeugte Leistung an die Fahrsteuerung/-regelung 36 rückzuführen. Der Antriebsmotor M wird bei einer Bremsung von der Fahrsteuerung/-regelung 36 so angesteuert, dass die durch die Bremsung regenerativ erzeugte Leistung wenigstens der durch die Fahrsteuerung/-regelung 36 verbrauchten/aufgenommenen elektrischen Leistung entspricht. Die Fahrsteuerung/-regelung 36 wird im Bremsbetrieb durch den Antriebsmotor M elektrisch versorgt. Dies ist in der Fig. 9 mit dem Pfeil P_{R} angedeutet.

Die genannte rekuperative Versorgung der Fahrsteuerung/-regelung 36 ist insbesondere dann von Vorteil, wenn ein Ausfall/Abfall der Fahrspannung für das Regalbediengerät 32 festgestellt wird, so wie dies in der Fig. 9 mit Hilfe des durchgestrichenen Pfeils für eine netzseitige Versorgungsleistung P_{N} dargestellt ist. Durch die vorgeschlagenen Maßnahmen erfolgt die Bremsung wenigstens so stark, dass die Fahrsteuerung/-regelung 36, welche die Bremsung bewirkt, bis zum Anhalten des Antriebsmotors M oder bis zu einem Zeitpunkt knapp davor betrieben wird. Damit ist ein sicheres Anhalten des Regalbediengeräts 32 mit Hilfe des Antriebsmotors M auch ohne das Vorhandensein einer Fahrspannung respektive Versorgungsspannung aus einem (öffentlichen) Versorgungsnetz möglich. Bei ausreichend vorhandener Fahrspannung kann eine Bremsung bei Bedarf selbstverständlich auch unter dem genannten Mindestmaß erfolgen.

Das Vorhandensein eines Stromspeichers C ist zwar von Vorteil, aber grundsätzlich ist das Verfahren unabhängig davon ausführbar, ob und wo ein Stromspeicher C für das Regalbediengerät 32 vorgesehen ist. Generell kann ja ein Regalbediengerät 32 respektive eine Lageranordnung einen mit der Fahrsteuerung/-regelung 36 und dem Antriebsmotor M elektrisch verbundenen Stromspeicher C, Ca, Cb aufweisen. Unabhängig davon ist der Einsatz eines Glättkondensators möglich. Dieser ist an den Eingang der Fahrsteuerung/-regelung 36 geschaltet und glättet die generatorisch erzeugte Versorgungsspannung bei Einsatz von intermittierend schaltenden Leistungsteilen, beispielsweise bei Einsatz von Vierquadrantenstellern. Ein Glättkondensator ist deutlich kleiner als ein Stromspeicher C für das Regalbediengerät 32 und dient nur Spannungsglättung am Eingang der Fahrsteuerung/-regelung 36, ist aber für eine Versorgung von Antriebsmotoren M viel zu klein. An dieser Stelle wird angemerkt, dass die Fahrsteuerung/-regelung 36 nicht zwangsläufig im Regalbediengerät 32 eingebaut sein muss, sondern auch stationär in der Lageranordnung, beispielsweise in einem Schaltschrank, angeordnet sein kann.

In einer vorteilhaften Variante des Regalbediengeräts 32 überwacht die Fahrsteuerung/- regelung 36 im Bremsbetrieb die vom Antriebsmotor M rekuperativ bereitgestellte Versorgungsspannung und verstärkt die Bremsung bei einem Abfall dieser Versorgungsspannung unter einen Spannungs-Grenzwert. Die Versorgungsspannung für die Fahrsteuerung/- regelung 36 wird in diesem Fall also geregelt. Dadurch wird die elektrische Versorgung der Fahrsteuerung/-regelung 36 bei Wegfall einer Fahrspannung besonders gut sichergestellt.

Vorteilhaft erfolgt die Bremsung bei einem Ausfall/Abfall der Fahrspannung für das Regalbediengerät 32 bis zu einem Ende eines Bewegungsbereichs eines durch den Antriebsmotor M angetriebenen Bewegungsglieds (z.B. Hubmechanismus, Verstellmechanismus, Greifmechanismus, usw.), sofern die Bremsung bei/über dem genannten Mindestmaß erfolgt, bei dem die durch die Bremsung rekuperativ/regenerativ erzeugte Leistung P_{R} der durch die Fahrsteuerung/-regelung 36 verbrauchten/aufgenommenen elektrischen Leistung entspricht. Es wird nun angenommen, dass sich das Regalbediengerät 32 bei Wegfall der Fahrspannung/Netzleistung P_{N} mit der Geschwindigkeit v bewegt und ungebremst gegen einen Puffer 38 fahren würde. Die Fahrsteuerung/-regelung 36 hat über einen Weggeber 39 Kenntnis über die Momentanposition beziehungsweise Ist-Position des Regalbediengeräts 32 und somit auch Kenntnis über den maximal zur Verfügung stehenden Bremsweg sₘₐₓ. Insbesondere, wenn das Regalbediengerät 32 mit empfindlichen Waren beladen ist, können die beim Bremsen auftretenden Beschleunigungen so vergleichsweise gering gehalten werden. Durch die elektrische Versorgung der Fahrsteuerung/-regelung 36 durch den Antriebsmotor M ist ein sicheres Anhalten vor dem Puffer 38 gewährleistet.

In einer weiteren vorteilhaften Variante wird die beim Anhalten erreichte Position in einem von der Fahrspannung unabhängig Daten haltenden Speicher 40 gespeichert. In dem gezeigten Beispiel hält das Regalbediengerät 32 nach einem Bremsweg s_{b} an, und diese letzte Position des Regalbediengeräts 32 wird im Speicher 40 gespeichert, bevor die Versorgungsspannung für das Regalbediengerät 32 komplett zusammenbricht. Steht die Fahrspannung wieder zur Verfügung, so wird in diesem Beispiel ein Hochlaufvorgang durchgeführt, bei dem ein Referenzpunkt 41 angefahren wird, um den Weggeber 39 zu initialisieren. Dies ist insbesondere dann erforderlich, wenn für den Weggeber 39 Relativweg- oder Relativwinkelgeber eingesetzt werden. Nach dem Stand der Technik erfolgt das Anfahren des Referenzpunkts 41 im Kriechgang, um eine Kollision mit dem Puffer 38 zu vermeiden. Durch Speichern der letzten Position hat die Fahrsteuerung/-regelung 36 jedoch Kenntnis über den zurückzulegenden Initialisierungsweg sᵢ. Das Zurücklegen dieser Strecke kann mit hohem Tempo erfolgen, da eine gezielte Bremsung des Regalbediengeräts 32 am Initialisierungspunkt 41 und vor dem Puffer 38 auch aus hohem Tempo möglich ist. Dadurch werden das (Wieder-)Hochfahren der Anlage und insbesondere das Anfahren des Referenzpunktes 41 beim Hochfahren beschleunigt.

In dem obigen Beispiel dient der Antriebsmotor M dem Fahrantrieb des Regalbediengeräts 32. Selbstverständlich kann das offenbarte Verfahren zusätzlich oder alternativ aber auch auf andere Motoren M angewandt werden, beispielsweise auf einen Motor für einen Hubantrieb (vergleiche Fig. 1). Die in der Fig. 9 dargestellten Wegstrecken s_{b}, sᵢ und sₘₐₓ erstrecken sich dann dementsprechend in der Vertikalen. Des Weiteren wird angemerkt, dass die Fahrsteuerung/-regelung 36 und/oder ein Stromspeicher C nicht notgedrungen Teil des Regalbediengeräts 32 sind, sondern beispielsweise auch in einem stationären Schaltschrank eingebaut sein können.

An dieser Stelle wird darauf hingewiesen, dass sich die obige Ausführungsform nicht nur für ein Einebenen-Regalbediengerät 32 eignet, sondern auch für andere Fördermittel mit einer Ladeplattform, insbesondere auch für ein Mehrebenen-Regalbediengerät 31 und einen Lift 17. Des Weiteren wird darauf hingewiesen, dass die obigen Maßnahmen nicht notgedrungen in Kombination mit den Merkmalen des Patentanspruchs 1 angewandt werden müssen, sondern auch unabhängig davon von Vorteil sind und daher eine eigenständige Erfindung bilden können.

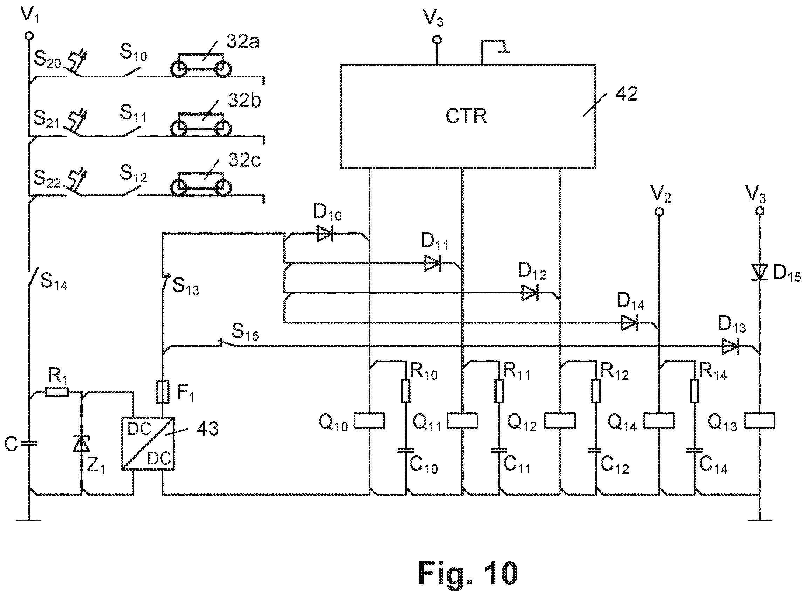

Fig. 10 zeigt schließlich ein schematisches Schaltbild einer weiteren vorteilhaften Ausgestaltung einer Schaltung zum Betrieb einer Lageranordnung 101..103. Im linken Bereich der Fig. 10 sind drei symbolisch dargestellte Regalbediengeräte 32a..32c vorgesehen, die mit Hilfe von ersten Schützen S₁₀, S₁₁, S₁₂ und Motorschutzschaltern S₂₀, S₂₁, S₂₂ an eine Fahrspannung V₁ angeschaltet sind. An die Fahrspannung V₁ ist auch der Stromspeicher C angeschlossen, welcher in der schon angesprochen Weise dem Speichern und dem Abgeben rekuperativ anfallender Bremsenergie dient. Der Schalter S₁₄ dient dazu, den Stromspeicher C erst dann niederohmig an die Fahrspannung V₁ anzuschalten, nach dem dessen Spannung weitgehend der Fahrspannung V₁ entspricht (vergleiche den Schalter S₂ in der Fig. 2). Im Normalbetrieb ist der Schalter S₁₄ daher geschlossen. Die Ansteuerung des Schaltkontakts S₁₄ erfolgt in diesem Beispiel über die Steuerspannung V₂, welche zum Schließen des Schaltkontakts S₁₄ an die Steuerspule Q₁₄ angelegt wird.

Im mittleren Bereich der Fig. 10 ist eine Betriebs-Steuerung 42/CTR vorgesehen, welche von einer Betriebs-Spannung V₃ eines Betriebs-Stromnetzes versorgt wird. Beispielsweise kann die Betriebs-Spannung V₃ für die Betriebs-Steuerung 42 12V, 24V oder 48V betragen, und die Betriebs-Steuerung 42 kann beispielsweise dazu ausgebildet sein, Befehle von einem zentralen Leitrechner (nicht dargestellt) zu erhalten und an das Regalbediengerät 32a..32c weiterzuleiten. Unter anderem ist die Betriebs-Steuerung 42 dazu ausgebildet, die Schaltkontakte S₁₀, S₁₁, S₁₂ zu öffnen oder zu schließen. Beispielsweise werden die Schaltkontakte S₁₀, S₁₁, S₁₂ geöffnet, wenn ein Zutritt einer Person zu einem Fahrbereich der Regalbediengeräte 32a..32c angefordert oder detektiert wird.

Zu den Steuerspulen Q₁₀, Q₁₁, Q₁₂ für die Schaltkontakte S₁₀, S₁₁, S₁₂ führt auch der Ausgang eines DC/DC-Wandlers 43, welcher die Fahrspannung V₁ auf einen niedrigeren, an die Steuerspulen Q₁₀, Q₁₁, Q₁₂ angepassten Wert wandelt. Dazu ist der Stromspeicher C an den Eingang des DC/DC-Wandlers 43 geschaltet. Über die Zenerdiode Z₁ und den Widerstand R₁ wird eine Überspannung am Eingang des DC/DC-Wandlers 43 verhindert. Der Ausgang des DC/DC-Wandlers 43 ist nicht direkt an die Steuerspulen Q₁₀, Q₁₁, Q₁₂ geschaltet, sondern über eine optionale Sicherung F₁ und einen Schaltkontakt S₁₃ sowie über Dioden D₁₀, D₁₁, D₁₂ dorthin geführt. In gleicher Weise ist der Ausgang des DC/DC-Wandlers 43 weiterhin mit der Steuerspule Q₁₄ des Schaltkontakts S₁₄ verbunden.

Den Steuerspulen Q₁₀, Q₁₁, Q₁₂ und Q₁₄ ist jeweils ein Verzögerungsglied parallel geschaltet, das jeweils einen Widerstand R₁₀, R₁₁, R₁₂ und R₁₄ und einen in Serie geschalteten Haltekondensator C₁₀, C₁₁, C₁₂ und C₁₄ aufweist.

Weiterhin umfasst die Schaltung eine Steuerspule Q₁₃ für den Schaltkontakt S₁₃, an welche die Betriebs-Spannung V₃ des Betriebs-Stromnetzes über eine Diode D₁₅ angeschaltet ist. Schließlich ist auch der Ausgang des DC/DC-Wandlers 43 über einen Schalter S₁₅ und eine Diode D₁₃ mit der Steuerspule Q₁₃ verbunden.

An dieser Stelle wird angemerkt, dass die Schaltkontakte S₁₀..S₁₄ zusammen mit den Steuerspulen Q₁₀..Q₁₄ Schütze oder Relais bilden. Die Schaltkontakte S₁₀, S₁₁, S₁₂ und S₁₄ sind in diesem Beispiel als Schließer, der Schaltkontakt S₁₃ als Öffner ausgebildet. Die Schaltkontakte S₁₀, S₁₁, S₁₂ und S₁₄ sind daher oberhalb einer gewissen Steuerspannung geschlossen, der Schaltkontakt S₁₃ dagegen offen. Selbstverständlich ist die gezeigte Auswahl an Schaltkontakten S₁₁..S₁₄ nicht zwingend, und es kann bei entsprechender Anpassung der Schaltung auch eine andere Zuordnung von Öffnern und Schließern getroffen werden.

Für das folgende Beispiel wird davon ausgegangen, dass der Stromspeicher C geladen ist und der Schalterkontakt S₁₄ durch eine entsprechende Steuerspannung V₂ geschlossen ist (vergleiche die Erläuterungen zu Fig. 2). Weiterhin wird davon ausgegangen, dass das Fahrnetz und das Betriebs-Stromnetz funktionstüchtig sind und die Fahrspannungen V₁ und die Betriebs-Spannung V₃ in ausreichender Höhe vorhanden sind. Über die Steuerspule Q₁₃ wird der Schaltkontakt S₁₃ daher offen gehalten. Die Schaltkontakte S₁₀, S₁₁, S₁₂ werden dagegen durch ein entsprechendes Spannungssignal der Betriebs-Steuerung 42 geschlossen gehalten. Die Dioden D₁₀, D₁₁, D₁₂ und D₁₄ dienen allgemein der Entkopplung der einzelnen Schaltzweige und verhindern beispielsweise, dass das Spannungssignal V₂ die Schaltkontakte S₁₀, S₁₁, S₁₂ schließt, obwohl dies von der Betriebs-Steuerung 42 nicht gewollt ist. Schließlich wird auch angenommen, dass sich keine Person im Fahrbereich der Regalbediengeräte 32a..32c befindet und der Schaltkontakt S₁₅ demzufolge offen ist.

Im Normalbetrieb sendet die Betriebs-Steuerung 42 Befehle, um Stückgüter 15 aus der Lageranordnung 101..103 auszulagern oder in diese einzulagern. In der schon beschriebenen Weise wird beim Bremsen der Regalbediengeräte 32a..32c oder beim Bremsen von Bewegungsgliedern der Regalbediengeräte 32a..32c rekuperativ anfallende elektrische Energie im Stromspeicher C gespeichert und beim Anfahren der Regalbediengeräte 32a..32c oder der Bewegungsglieder diesem wieder entnommen. Für die Ausführung des empfangenen Befehls weisen die Regalbediengeräte 32a..32c jeweils Fahrsteuerungen/-regelungen 36 auf (vergleiche Fig. 9).

Fällt nun die Betriebs-Spannung V₃ unter einen für den Betrieb der Betriebs-Steuerung 42 nötigen Wert, so können die Schaltkontakte S₁₀, S₁₁, S₁₂ von der Betriebs-Steuerung 42 nicht mehr aktiv geschlossen gehalten werden. Ohne zusätzliche Maßnahmen würde daher sofort die (an sich vorhandene) Fahrspannung V₁ von den Regalbediengeräten 32a..32c weggeschaltet werden und auch deren Fahrsteuerung/-regelung 36 ausfallen. Dies ist insbesondere dann nachteilig und auch gefährlich, wenn die Regalbediengeräte 32a..32c nicht über mechanische selbsthaltende Bremsen verfügen, sondern elektronisch mit Hilfe der Antriebsmotoren M gebremst werden, beispielsweise mit Hilfe eines Vierquadrantenstellers. Durch den Ausfall der Fahrsteuerung/-regelung 36 ist ein kontrolliertes Anhalten der Regalbediengeräte 32a..32c dann nicht möglich, weswegen die Regalbediengeräte 32a..32c und deren Bewegungsglieder aufgrund deren kinetischen Energie unter Umständen unkontrolliert gegen mechanische Anschläge fahren könnten. Dadurch könnten nicht nur die Regalbediengerät 32a..32c selbst, sondern auch die mit diesem transportierten Waren 15 Schaden nehmen.

Vorteilhaft wird der Schaltkontakt S₁₃ durch den Abfall an der Steuerspule Q₁₃ nun aber geschlossen, wodurch der Stromspeicher C respektive die Fahrspannung V₁ über den Spannungswandler 43 an die Steuerspulen Q₁₀, Q₁₁, Q₁₂ der ersten Schütze geschaltet wird. Die Schaltkontakte S₁₀, S₁₁, S₁₂ bleiben daher auch bei Ausfall des die Betriebs-Steuerung 42 versorgenden Betriebs-Stromnetzes geschlossen. Dies trifft selbst dann zu, wenn auch die Fahrspannung V₁ ausfällt, da ja der Stromspeicher C im Regelbetrieb wenigstens eine vorgegebene Mindestspannung aufweist.

Durch die vorgeschlagenen Maßnahmen werden die Regalbediengeräte 32a..32c daher selbst bei einem Totalausfall eines (öffentlichen) versorgenden Stromnetzes mit elektrischer Energie versorgt und können auch ohne die Zuhilfenahme selbsthaltender Bremsen kontrolliert zum Stillstand gebracht werden. Hilfreich ist dabei auch der Umstand, dass beim Bremsen anfallende rekuperativ erzeugte elektrische Energie in den Stromspeicher C rückgespeist wird und den Spannungspegel dort anhebt. Das heißt, dass ein kontrolliertes Bremsen auch dann möglich ist, wenn der Stromspeicher C bei Ausfall des Versorgungsnetzes den niedrigsten im Normalbetrieb vorkommenden Spannungspegel aufweist.

In dem konkret dargestellten Beispiel wird angenommen, dass die Betriebs-Steuerung 42 nach dem Aus- oder Abfall der Betriebs-Spannung V₃ keinen Befehl mehr für einen Nothalt der Regalbediengeräte 32a..32c absetzen kann und diese daher vorerst den Normalbetrieb fortsetzen. Erst wenn die Spannung im Stromspeicher C unter einen bestimmten Schwellwert gesunken ist, wird von den Fahrsteuerungen/-regelungen 36 der Regalbediengeräte 32a..32c ein Ausfall beziehungsweise unzulässiger Abfall der Fahrspannung V₁ registriert/detektiert und in Folge ein Anhaltevorgang für die Regalbediengeräte 32a..32c und/oder dessen Bewegungsglieder 10, 21, 22 eingeleitet. Auf diese Weise halten die Regalbediengeräte 32a..32c im Notfall autonom an. Ein Ausfall der nicht mehr durch das Betriebs-Stromnetz versorgten Betriebs-Steuerung 42 ist daher ungefährlich.

Alternativ wäre auch denkbar, dass der Stromspeicher C bei übermäßigem Abfall der Betriebs-Spannung V₃ an die Betriebs-Steuerung 42 geschaltet wird und dieser damit vorerst der weitere Betrieb ermöglicht wird. Auf diese Weise kann die Betriebs-Steuerung 42 aktiv einen Befehl zum Anhalten an die Regalbediengeräte 32a..32c senden. Die in den Regalbediengeräten 32a..32c verbauten Fahrsteuerungen/-regelungen 36 brauchen in diesem Fall einen Aus- oder Abfall der Fahrspannung V₁ daher nicht unbedingt erkennen und können somit einfacher aufgebaut sein. Selbstverständlich können die genannten Maßnahmen auch kombiniert werden, um die Sicherheit der Lageranordnung 101..103 noch weiter zu erhöhen.

Das Anschalten des Stromspeichers C an die Steuerspulen Q₁₀, Q₁₁, Q₁₂ der ersten Schütze dauert in der Regel nur wenige Millisekunden. Dennoch könnten die Schaltkontakte S₁₀, S₁₁, S₁₂ kurzfristig öffnen und unter Umständen Störungen in den Fahrsteuerungen/- regelungen 36 der Regalbediengeräte 32a..32c hervorrufen. Mit Hilfe der optionalen Haltekondensatoren C₁₀, C₁₁, C₁₂ werden die Steuerspulen Q₁₀, Q₁₁, Q₁₂ aber auch während des Anschalten des Stromspeichers C angesteuert und die Schaltkontakte S₁₀, S₁₁, S₁₂ geschlossen gehalten. Ein kurzfristiger Spannungsausfall an den Regalbediengeräten 32a..32c, welcher dort unter Umständen zu Störungen führen könnte, wird auf diese Weise vermieden.

Abschließend wird die Funktion des Schalters S₁₅ erläutert. Dieser wird geschlossen, wenn ein Zutritt einer Person zu einem Fahrbereich der Regalbediengeräte 32a..32c angefordert oder detektiert wird. In Folge öffnet die Betriebs-Steuerung 42 die Schaltkontakte S₁₀, S₁₁, S₁₂, sodass der Fahrbereich der Regalbediengeräte 32a..32c gefahrlos betreten werden kann. Durch das Öffnen des Schalters S₁₅ wird weiterhin der Ausgang des DC/DC-Wandlers 43 an die Steuerspule Q₁₃ geschaltet, wodurch diese auch bei Ausfall der Betriebs-Spannung V₃ (oder auch bei Ausfall der Fahrspannung V₁) elektrisch versorgt wird und somit den Schaltkontakt S₁₃ offen hält. Dadurch bleiben auch die Schaltkontakte S₁₀, S₁₁, S₁₂ selbst dann offen, wenn die Betriebs-Spannung V₃ ab- oder ausfällt.

Ohne diese Maßnahme würde ein Abfall der Betriebs-Spannung V₃ dagegen in der bereits beschriebenen Weise ein Schließen der Schaltkontakte S₁₀, S₁₁, S₁₂ bewirken. Dadurch könnten die Regalbediengeräte 32a..32c in unerwarteter und unerwünschter Weise plötzlich mit der Fahrspannung V₁ versorgt werden (entweder aus dem Fahrnetz oder aus dem Stromspeicher C) und sich in Bewegung setzten. Da ein Regalbediengerät 32a..32c in der Regel einige hundert Kilo wiegt, würden schwere Verletzungen und mitunter der Tod der im Fahrbereich der Regalbediengeräte 32a..32c befindlichen Person drohen. Durch den Schalter S₁₅ wird diese Gefahr jedoch abgewendet.

An dieser Stelle wird angemerkt dass eine Aufteilung der Stromversorgung für die Lageranordnung 101..103 in eine Fahrspannung V₁ und eine Betriebs-Spannung V₃ vorteilhaft, jedoch nicht zwingend ist. Denkbar ist auch die Versorgung mit einer einzigen Spannung oder auch mit noch weiter unterteilten Stromnetzen. Weiterhin wird angemerkt, dass die offenbarte Schaltung auch auf ein einziges Regalbediengerät 32a..32c oder eine andere Anzahl von Regalbediengeräten 32a..32c anwendbar ist.

Weiterhin dient die Aufteilung der offenbarten Funktionen auf eine Stromspeicher-Schaltung/Steuerung 14, eine Fahrsteuerung/-Regelung 36 und eine Betriebssteuerung 42 unter anderem der besseren Darstellung der unterschiedlichen Funktionen. Selbstverständlich können Funktionen auch anders aufgeteilt oder zusammengefasst sein.

Die Ausführungsbeispiele zeigen mögliche Ausführungsvarianten einer erfindungsgemäßen Lageranordnung 101..103, wobei an dieser Stelle bemerkt sei, dass die Erfindung nicht auf die speziell dargestellten Ausführungsvarianten desselben eingeschränkt ist. Der Schutzumfang der Erfindung wird durch die beigefügten Ansprüche definiert.

Insbesondere wird festgehalten, dass die dargestellten Vorrichtungen in der Realität auch mehr Bestandteile als dargestellt umfassen können.

Der Ordnung halber sei abschließend darauf hingewiesen, dass zum besseren Verständnis des Aufbaus der Lageranordnung 101..103 diese bzw. deren Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden. Insbesondere betrifft dies die den Figuren 5 und 6 zugeordnete Beschreibung sowie den die den Figuren 9 und 10 zugeordnete Beschreibung.

### Bezugszeichenaufstellung

- 101..103: Lageranordnung
- 2: Lagerplatz
- 31, 32, 32a..32c: Regalbediengerät
- 4, 4a, 4b: Stromversorgung
- 5: Regalreihe
- 6: Regalgasse
- 7: Fahrgestell
- 8: Schienen
- 9: Mast
- 10: Ladeplattform
- 11: Lastaufnahmevorrichtung
- 12, 12a, 12b: Verkabelung
- 13: Gleichrichter
- 14: elektronische Stromspeicher-Schaltung/Steuerung
- 15: Stückgut
- 16: Fahrgestell
- 17: Lift
- 18: Mast
- 19: Ladeplattform
- 20: Bereitstellvorrichtung
- 21: erster Schlitten
- 22: zweiter Schlitten
- 23: Antriebsvorrichtung
- 24: erster Riemen
- 25: erste Rolle
- 26: zweiter Riemen
- 27: zweite Rolle
- 28: Transportorgan
- 29: Sensor
- 30: Steuermodul
- 33: Buskoppler
- 34: Datenübertragungsmittel
- 35: Buskoppler
- 36: Fahrsteuerung/-regelung
- 37: Rad
- 38: Puffer
- 39: Weggeber
- 40: Speicher
- 41: Referenzposition
- 42: Betriebs-Steuerung
- 43: DC/DC-Wandler
- C, Ca, Cb: Stromspeicher
- C₁₀..C₁₂, C₁₄: Haltekondensator
- D₁₀..D₁₅: Diode
- F₁: Sicherung
- M: Motor
- P_{N}: Netzleistung
- P_{R}: rekuperativ erzeugte Leistung
- Q₁₀..Q₁₄: Steuerspule
- R: Widerstand
- R₁: Widerstand
- R₁₀..R₁₂, R₁₄: Widerstand
- S₁..S₃: Schalter
- S₁₀..S₁₅: Schalter/Schaltkontakt
- S₂₀..S₂₂: Motorschutzschalter
- s_{b}: Bremsweg
- sᵢ: Initialisierungsweg
- sₘₐₓ: maximaler Bremsweg
- V: Spannungsmessgerät
- V₁: Fahrspannung
- V₂: Steuerspannung Stromspeicheranschaltung
- V₃: Betriebs-Spannung für Betriebs-Steuerung
- Z₁: Zenerdiode

## Patentansprüche

1. Lageranordnung (101..103), umfassend
- mehrere Lagerplätze (2) für Stückgüter (15), die nebeneinander und übereinander angeordnet sind,
- mehrere rechnergesteuerte Regalbediengeräte (31, 32, 32a..32c) zum Einlagern der Stückgüter (15) auf die Lagerplätze (2) und Auslagern der Stückgüter (15) von den Lagerplätzen (2), welche relativ zu den Lagerplätzen (2) verfahrbar sind, und
- zumindest eine Stromversorgung (4, 4a, 4b) für die genannten Regalbediengeräte (31, 32, 32a..32c), welche eine Fahrspannung (V1) bereitstellt, und
- zumindest einen Stromspeicher (C, Ca, Cb), welcher der zumindest einen genannten Stromversorgung (4, 4a, 4b) zugeordnet oder von dieser umfasst ist,
**gekennzeichnet durch**
- eine von einem Betriebs-Stromnetz mit einer Betriebsspannung (V3) versorgte Betriebs-Steuerung (42), welche ausgangsseitig mit einer Steuerspule (Q₁₀, Q₁₁, Q₁₂) für Schaltkontakte (S₁₀, S₁₁, S₁₂) eines ersten Schützes in einem Strompfad zu einem Regalbediengerät (31, 32, 32a..32c) verbunden ist und dazu eingerichtet ist, diesen ersten Schütz im Fahrbetrieb des Regalbediengeräts (31, 32, 32a..32c) und bei ausreichender Betriebs-Spannung (V3) im Betriebs-Stromnetz geschlossen zu halten und die Fahrspannung (V1) an das zumindest eine Regalbediengerät (31, 32, 32a..32c) zu leiten und,
- eine Schaltung, welche dazu eingerichtet ist, den Stromspeicher (C, Ca, Cb) für dieses Regalbediengerät (31, 32, 32a..32c) bei übermäßigem Abfall der Betriebsspannung (V3) im Betriebs-Stromnetz mit Hilfe eines zweiten Schützes (Q₁₃, S₁₃) an die Steuerspule (Q₁₀, Q₁₁, Q₁₂) des ersten Schützes zu schalten und die Fahrspannung (V1) weiterhin an das zumindest eine Regalbediengerät (31, 32, 32a..32c) zu leiten
- wobei sich die Stromversorgung (4, 4a, 4b) für die genannten Regalbediengeräte (31, 32, 32a..32c), welche eine Fahrspannung (V1) bereitstellt, von dem Betriebs-Stromnetz für die Betriebs-Steuerung (42), welche eine Betriebsspannung (V3) bereitstellt, unterscheidet.

2. Verfahren zum Betrieb einer Lageranordnung (101..103) mit mehreren Lagerplätzen (2) für Stückgüter (15), die nebeneinander und übereinander angeordnet sind, zumindest einem rechnergesteuerten Regalbediengerät (31, 32, 32a..32c) zum Einlagern der Stückgüter (15) auf die Lagerplätze (2) und Auslagern der Stückgüter (15) von den Lagerplätzen (2), wobei das zumindest eine Regalbediengerät (31, 32, 32a..32c) relativ zu den Lagerplätzen (2) verfahrbar ist, und mit zumindest einer Stromversorgung (4, 4a, 4b), welche eine Fahrspannung (V1) bereitstellt, für das genannte, zumindest eine Regalbediengerät (31, 32, 32a..32c), **dadurch gekennzeichnet dass**
- eine von einem Betriebs-Stromnetz mit einer Betriebsspannung (V3) versorgte Betriebs-Steuerung (42), welche ausgangsseitig mit einer Steuerspule (Q₁₀, Q₁₁, Q₁₂) für Schaltkontakte (S₁₀, S₁₁, S₁₂) eines ersten Schützes in einem Strompfad zu einem Regalbediengerät (31, 32, 32a..32c) verbunden ist, diesen ersten Schütz im Fahrbetrieb des Regalbediengeräts (31, 32, 32a..32c) und bei ausreichender Betriebs-Spannung (V3) im Betriebs-Stromnetz geschlossen hält und die Fahrspannung (V1) an das zumindest eine Regalbediengerät (31, 32, 32a..32c) leitet, wobei sich die Stromversorgung (4, 4a, 4b) für die genannten Regalbediengeräte (31, 32, 32a..32c), welche eine Fahrspannung (V1) bereitstellt, von dem Betriebs-Stromnetz für die Betriebs-Steuerung (42), welche eine Betriebsspannung (V3) bereitstellt, unterscheidet und
- zumindest ein Stromspeicher (C, Ca, Cb), welcher zumindest einer Stromversorgung (4, 4a, 4b) für dieses Regalbediengerät (31, 32, 32a..32c) zugeordnet oder von dieser umfasst ist, bei übermäßigem Abfall der Betriebsspannung (V3) im Betriebs-Stromnetz mit Hilfe eines zweiten Schützes (Q₁₃, S₁₃) an die Steuerspule (Q₁₀, Q₁₁, Q₁₂) des ersten Schützes geschaltet wird und die Fahrspannung (V1) weiterhin an das zumindest eine Regalbediengerät (31, 32, 32a..32c) leitet.

3. Verfahren nach Anspruch 2, **dadurch gekennzeichnet, dass** der Schaltkontakt (S₁₀, S₁₁, S₁₂) des ersten Schützes mit Hilfe eines an dessen Steuerspule (Q₁₀, Q₁₁, Q₁₂) geschalteten Haltekondensators (C₁₀, C₁₁, C₁₂) geschlossen gehalten wird, bis der Schaltkontakt (S₁₃) des zweiten Schützes geschlossen ist.

4. Verfahren nach Anspruch 2 oder 3, **dadurch gekennzeichnet, dass** eine Fahrsteuerung/-regelung (36) des zumindest einen Regalbediengeräts (31, 32, 32a..32c) einen Ausfall oder unzulässigen Abfall einer Fahrspannung (V₁) des Regalbediengeräts (31, 32, 32a..32c) detektiert und in Folge einen Anhaltevorgang für das zumindest eine Regalbediengerät (31, 32, 32a..32c) und/oder dessen Bewegungsglieder (10, 21, 22) einleitet.

5. Verfahren nach einem der Ansprüche 2 bis 4, **dadurch gekennzeichnet, dass** der Stromspeicher (C, Ca, Cb) für das zumindest eine Regalbediengerät (31, 32, 32a..32c) bei übermäßigem Spannungsabfall im Betriebs-Stromnetz an die Betriebs-Steuerung (42) geschaltet wird.

6. Verfahren nach einem der Ansprüche 2 bis 5, **dadurch gekennzeichnet, dass** der genannte Stromspeicher (C, Ca, Cb) an die Steuerspule (Q₁₃) des zweiten Schützes (Q₁₃, S₁₃) geschaltet wird, wenn ein Zutritt einer Person zu einem Fahrbereich des zumindest einen Regalbediengeräts (31, 32, 32a..32c) angefordert oder detektiert wird.

## Claims

1. A storage arrangement (101..103), comprising
- several storage places (2) for piece goods (15) that are arranged next to one another and on top of one another,
- several computer-controlled storage-and-retrieval units (31, 32, 32a..32c), which are displaceable relative to the storage places (2), for storing the piece goods (15) in the storage places (2) and retrieving the piece goods (15) from the storage places (2), and
- at least one power supply (4, 4a, 4b), which provides a travel voltage (V1), for the mentioned storage-and-retrieval units (31, 32, 32a..32c), and
- at least one electric energy storage (C, Ca, Cb), which is assigned to or comprised by the at least one mentioned power supply (4, 4a, 4b),
**characterized by**
- an operation controller (42) which is supplied with an operating voltage (V3) by an operation grid and which is on the output side connected to a control coil (Q₁₀, Qn, Q₁₂) for switching contacts (S₁₀, S₁₁, S₁₂) of a first contactor in a current path to a storage-and-retrieval unit (31, 32, 32a..32c) and is designed for keeping this first contactor closed during traveling operation of the storage-and-retrieval unit (31, 32, 32a..32c) and sufficient operating voltage (V3) in the operation grid and for conducting the travel voltage (V1) to the at least one storage-and-retrieval unit (31, 32, 32a..32c), and
- a circuit which is designed for switching the electric energy storage (C, Ca, Cb) for this storage-and-retrieval unit (31, 32, 32a..32c) to the control coil (Q₁₀, Q₁₁, Q₁₂) of the first contactor in case of an excessive drop of the operating voltage (V3) in the operation grid with the aid of a second contactor (Q₁₃, S₁₃) and for still conducting the travel voltage (V1) to the at least one storage-and-retrieval unit (31, 32, 32a..32c),
- wherein the power supply (4, 4a, 4b) for the mentioned storage-and-retrieval units (31, 32, 32a..32c) providing a travel voltage (V1) differs from the operation grid for the operation controller (42) providing an operating voltage (V3).

2. A method for operating a storage arrangement (101.. 103) with several storage places (2) for piece goods (15) that are arranged next to one another and on top of one another, at least one computer-controlled storage-and-retrieval unit (31, 32, 32a..32c) for storing the piece goods (15) in the storage places (2) and retrieving the piece goods (15) from the storage places (2), wherein the at least one storage-and-retrieval unit (31, 32, 32a..32c) is displaceable relative to the storage places (2), and having at least one power supply (4, 4a, 4b), which provides a travel voltage (V1), for the mentioned at least one storage-and-retrieval unit (31, 32, 32a..32c), **characterized in that**
- an operation controller (42), which is supplied with an operating voltage (V3) by an operation grid and which is on the output side connected to a control coil (Q₁₀, Q₁₁, Q₁₂) for switching contacts (S₁₀, S₁₁, S₁₂) of a first contactor in a current path to a storage-and-retrieval unit (31, 32, 32a..32c), keeps this first contactor closed during traveling operation of the storage-and-retrieval unit (31, 32, 32a..32c) and sufficient operating voltage (V3) in the operation grid and conducts the travel voltage (V1) to the at least one storage-and-retrieval unit (31, 32, 32a..32c), wherein the power supply (4, 4a, 4b) for the mentioned storage-and-retrieval units (31, 32, 32a..32c) providing a travel voltage (V1) differs from the operation grid for the operation controller (42) providing an operating voltage (V3), and
- at least one electric energy storage (C, Ca, Cb), which is assigned to or comprised by at least one power supply (4, 4a, 4b) for this storage-and-retrieval unit (31, 32, 32a..32c), is switched to the control coil (Q₁₀, Q₁₁, Q₁₂) of the first contactor in case of an excessive drop of the operating voltage (V3) in the operation grid with the aid of a second contactor (Q₁₃, S₁₃) and still conducts the travel voltage (V1) to the at least one storage-and-retrieval unit (31, 32, 32a..32c).

3. The method according to claim 2, **characterized in that** the switching contact (S₁₀, S₁₁, S₁₂) of the first contactor is kept closed with the aid of a hold capacitor (C₁₀, C₁₁, C₁₂) connected to the contactor's control coil (Q₁₀, Q₁₁, Q₁₂) until the switching contact (S₁₃) of the second contactor has been closed.

4. The method according to claim 2 or 3, **characterized in that** an open loop travel controller/closed loop travel controller (36) of the at least one storage-and-retrieval unit (31, 32, 32a..32c) detects an outage or an inadmissible drop of the travel voltage (V₁) of the storage-and-retrieval unit (31, 32, 32a..32c) and in consequence initiates a stopping operation for the at least one storage-and-retrieval unit (31, 32, 32a..32c) and/or its moving members (10, 21, 22).

5. The method according to one of claims 2 to 4, **characterized in that** the electric energy storage (C, Ca, Cb) for the at least one storage-and-retrieval unit (31, 32, 32a..32c) is switched to the operation controller (42) in case of excessive voltage drop in the operation grid.

6. The method according to one of claims 2 to 5, **characterized in that** the mentioned electric energy storage (C, Ca, Cb) is switched to the control coil (Q₁₃) of the second contactor (Q₁₃, S₁₃) if an access of a person to a travel range of the at least one storage-and-retrieval unit (31, 32, 32a..32c) is requested or detected.

## Revendications

1. Ensemble de stockage (101..103), comprenant
- plusieurs emplacements de stockage (2) pour des articles individuels (15) qui sont juxtaposés et superposés,
- plusieurs transstockeurs (31, 32, 32a..32c) commandés par ordinateur pour le stockage des articles individuels (15) sur les emplacements de stockage (2) et le déstockage des articles individuels (15) à partir des emplacements de stockage (2), qui peuvent être déplacés relativement aux emplacements de stockage (2), et
- au moins une alimentation électrique (4, 4a, 4b) pour lesdits transstockeurs (31, 32, 32a..32c), qui fournit une tension de marche (V1), et
- au moins un accumulateur de courant (C, Ca, Cb), qui est affecté à ladite alimentation électrique (4, 4a, 4b) au moins au nombre de un ou est englobé par celle-ci,
**caractérisé par**
- une commande de fonctionnement (42) qui est alimentée en tension de service (V3) par un réseau électrique de service et qui est raccordée côté sortie à une bobine de commande (Q₁₀, Q₁₁, Q₁₂) pour des contacts de commutation (S₁₀, S₁₁, S₁₂) d'un premier contacteur dans un trajet de courant conduisant à un transstockeur (31, 32, 32a..32c) et qui est agencée pour maintenir fermé ce premier contacteur dans le mode marche du transstockeur (31, 32, 32a..32c) et en présence d'une tension de service (V3) suffisante dans le réseau électrique de service et pour conduire la tension de marche (V1) au transstockeur (31, 32, 32a..32c) au moins au nombre de un, et
- un montage qui est agencé pour, en présence d'une chute excessive de la tension de service (V3) dans le réseau électrique de service, connecter l'accumulateur de courant (C, Ca, Cb) pour ce transstockeur (31, 32, 32a..32c) à la bobine de commande (Q₁₀, Q₁₁, Q₁₂) du premier contacteur à l'aide d'un deuxième contacteur (Q₁₃, S₁₃) et pour conduire en outre la tension de marche (V1) au transstockeur (31, 32, 32a..32c) au moins au nombre de un,
- dans lequel l'alimentation électrique (4, 4a, 4b) pour lesdits transstockeurs (31, 32, 32a..32c) qui fournit une tension de marche (V1) est différente du réseau électrique de service pour la commande de fonctionnement (42) qui fournit une tension de service (V3).

2. Procédé de fonctionnement d'un ensemble de stockage (101..103) avec plusieurs emplacements de stockage (2) pour des articles individuels (15) qui sont juxtaposés et superposés, au moins un transstockeur (31, 32, 32a..32c) commandé par ordinateur pour le stockage des articles individuels (15) sur les emplacements de stockage (2) pour le déstockage des articles individuels (15) à partir des emplacements de stockage (2), dans lequel le transstockeur (31, 32, 32a..32c) au moins au nombre de un peut être déplacé relativement aux emplacements de stockage (2), et avec au moins une alimentation électrique (4, 4a, 4b) qui fournit une tension de marche (V1) pour ledit transstockeur (31, 32, 32a..32c) au moins au nombre de un,
**caractérisé en ce que**
- une commande de fonctionnement (42), qui est alimentée en tension de service (V3) par un réseau électrique de service et qui est raccordée côté sortie à une bobine de commande (Q₁₀, Q₁₁, Q₁₂) pour des contacts de commutation (S₁₀, S₁₁, S₁₂) d'un premier contacteur dans un trajet de courant conduisant à un transstockeur (31, 32, 32a..32c), maintient fermé ce premier contacteur dans le mode marche du transstockeur (31, 32, 32a..32c) et en présence d'une tension de service (V3) suffisante dans le réseau électrique de service et conduit la tension de marche (V1) au transstockeur (31, 32, 32a..32c) au moins au nombre de un, dans lequel l'alimentation électrique (4, 4a, 4b) pour lesdits transstockeurs (31, 32, 32a..32c) qui fournit une tension de marche (V1) est différente du réseau électrique de service pour la commande de fonctionnement (42) laquelle fournit une tension de service (V3), et
- au moins un accumulateur de courant (C, Ca, Cb) qui est affecté au moins à une alimentation électrique (4, 4a, 4b) pour ce transstockeur (31, 32, 32a..32c) ou qui est englobé par celle-ci est, en présence d'une chute excessive de la tension de service (V3) dans le réseau électrique de service, connecté à l'aide d'un deuxième contacteur (Q₁₃, S₁₃) à la bobine de commande (Q₁₀, Q₁₁, Q₁₂) du premier contacteur et conduit en outre la tension de marche (V1) vers le transstockeur (31, 32, 32a..32c) au moins au nombre de un.

3. Procédé selon la revendication 2, **caractérisé en ce que** le contact de commutation (S₁₀, S₁₁, S₁₂) du premier contacteur est maintenu fermé à l'aide d'un condensateur de maintien (C₁₀, C₁₁, C₁₂) connecté à sa bobine de commande (Q₁₀, Q₁₁, Q₁₂) jusqu'à ce que le contact de commutation (S₁₃) du deuxième contacteur soit fermé.

4. Procédé selon la revendication 2 ou 3, **caractérisé en ce qu'**une commande/régulation de marche (36) du transstockeur (31, 32, 32a..32c) au moins au nombre de un détecte une panne ou une chute inadmissible d'une tension de marche (V₁) du transstockeur (31, 32, 32a..32c) et introduit par la suite un processus d'arrêt pour le transstockeur (31, 32, 32a..32c) au moins au nombre de un et/ou ses organes de mouvement (10, 21, 22).

5. Procédé selon l'une des revendications 2 à 4, **caractérisé en ce que** l'accumulateur de courant (C, Ca, Cb) pour le transstockeur (31, 32, 32a..32c) au moins au nombre de un est connecté à la commande de fonctionnement (42) en présence d'une chute de tension excessive dans le réseau électrique de service.

6. Procédé selon l'une des revendications 2 à 5, **caractérisé en ce que** ledit accumulateur de courant (C, Ca, Cb) est connecté à la bobine de commande (Q₁₃) du deuxième contacteur (Q₁₃, S₁₃) quand un accès d'une personne à une zone de marche du transstockeur (31, 32, 32a..32c) au moins au nombre de un est demandé ou détecté.
